# EUROPÄISCHE PATENTANMELDUNG

(11) **EP 4 796 256 A1**
(43) Veröffentlichungstag der Anmeldung: **26.08.2026**
(21) Anmeldenummer: 26160010.0
(22) Anmeldetag: 23.02.2026
(51) Int. Cl.: B24B 7/06, B23Q 39/04, B24B 7/28, B24B 21/00, B24B 27/00

(54) **BEARBEITUNGSZENTRUM UND VERFAHREN ZUR BEARBEITUNG VON WERKSTÜCKEN VON VERSCHIEDENEN WERKSTÜCKCHARGEN, FERTIGUNGSLINIE SOWIE STEUERUNGSEINHEIT ZUR STEUERUNG EINES BEARBEITUNGSZENTRUMS**

(30) Priorität: 24.02.2025 DE 102025106815
(71) Anmelder: Karl Heesemann Maschinenfabrik GmbH & Co. KG, 32547 Bad Oeynhausen (DE)
(72) Erfinder: Giese, Christoph, 32547 Bad Oeynhausen (DE)
(74) Vertreter: Eisenführ Speiser

(57) **Zusammenfassung**

Bearbeitungszentrum (1) zur Bearbeitung von Werkstücken (2) von verschiedenen Werkstückchargen (C1, C2, C3), wobei die jeweilige Werkstückcharge (C1, C2, C3) ein Werkstück (2) oder eine Gruppe von Werkstücken (2) mit derselben Werkstückhöhe (H1, H2, H3) umfasst, das Bearbeitungszentrum (1) umfassend: einen Arbeitstisch (10) mit einer Auflagefläche (11), auf der die Werkstücke (2) der jeweiligen Werkstückchargen (C1, C2, C3) zur Bearbeitung aufliegen, eine Fördereinheit (20), welche die Auflagefläche (11) mit einer Förderebene (21) ausbildet, wobei die Fördereinheit (20) ausgebildet ist, die Werkstücke (2) zur Bearbeitung in einer Förderrichtung (F) von einem Maschineneinlauf (1a) zu einem Maschinenauslauf (1b) des Bearbeitungszentrums (1) mit einem Vorschub zu transportieren, wobei dem Bearbeitungszentrum (1) über den Maschineneinlauf (1a) Werkstücke (2) zur Bearbeitung zugeführt werden und über den Maschinenauslauf (1b) die bearbeiteten Werkstücke (2) aus dem Bearbeitungszentrum (1) ausgeführt werden, eine gegenüber der Auflagefläche (11) verstellbar angeordnete erste Bearbeitungseinheit (30) zur Bearbeitung der auf der Auflagefläche (11) angeordneten Werkstücke (2) mit einem ersten Werkzeugsatz (32), wobei die erste Bearbeitungseinheit (30) einen ersten Bearbeitungsabschnitt (31) ausbildet, an dem der erste Werkzeugsatz (32) zur Bearbeitung der Werkstücke (2) derart angeordnet ist, dass der erste Werkzeugsatz (32) eine erste Bearbeitungsebene (33) definiert, welche sich parallel zu der Förderebene (21) erstreckt, wobei die erste Bearbeitungsebene (33) und die Förderebene (21) mit einem ersten Abstand (A1) zueinander beabstandet angeordnet sind, wobei die erste Bearbeitungseinheit (30) gegenüber der Auflagefläche (11) in einer solchen Weise verstellbar ist, dass der erste Abstand (A1) zwischen einem ersten Minimalabstand und einem von dem ersten Minimalabstand verschiedenen ersten Maximalabstand einstellbar ist, und eine gegenüber der Auflagefläche (11) verstellbar angeordnete zweite Bearbeitungseinheit (40) zur Bearbeitung der auf der Auflagefläche (11) angeordneten Werkstücke (2) mit einem zweiten Werkzeugsatz, wobei die zweite Bearbeitungseinheit (40) einen zweiten Bearbeitungsabschnitt (41) ausbildet, an dem der zweite Werkzeugsatz (42) zur Bearbeitung der Werkstücke (2) derart angeordnet ist, dass der zweite Werkzeugsatz (42) eine zweite Bearbeitungsebene (43) definiert, welche sich parallel zu der Förderebene (21) erstreckt, wobei die zweite Bearbeitungsebene (43) und die Förderebene (21) mit einem zweiten Abstand (A2) zueinander beabstandet angeordnet sind, wobei die zweite Bearbeitungseinheit (40) gegenüber der Auflagefläche (11) in einer solchen Weise verstellbar ist, dass der zweite Abstand (A2) zwischen einem zweiten Minimalabstand und einem von dem zweiten Minimalabstand verschiedenen zweiten Maximalabstand einstellbar ist, und die zweite Bearbeitungseinheit (40) in der Förderrichtung (F) mit einem Bearbeitungseinheitenabstand (BA) hinter der ersten Bearbeitungseinheit (30) angeordnet ist, dadurch gekennzeichnet, dass eine erste Höhenverstellantriebseinheit (50) angeordnet ist, die dazu ausgebildet ist, die erste Bearbeitungseinheit (30) gegenüber der Auflagefläche (11) in einer solchen Weise zu verstellen, dass der erste Abstand (A1) zwischen dem ersten Minimalabstand und dem ersten Maximalabstand einstellbar ist, und eine zweite Höhenverstellantriebseinheit (60) angeordnet ist, die dazu ausgebildet ist, die zweite Bearbeitungseinheit (40) gegenüber der Auflagefläche (11) in einer solchen Weise zu verstellen, dass der zweite Abstand (A2) zwischen dem zweiten Minimalabstand und dem zweiten Maximalabstand einstellbar ist, wobei zur Bearbeitung von Werkstücken (2) von verschiedenen Werkstückchargen (C1, C2, C3) der erste Abstand (A1) und der zweite Abstand (A2) derart einstellbar sind, dass zur zeitgleichen Bearbeitung von mehreren Chargen (C1, C2, C3) mit unterschiedlichen Werkstückhöhen (H1, H2, H3) der erste Abstand (A1) von dem zweiten Abstand (A2) verschieden einstellbar ist.

## Beschreibung

Die Erfindung betrifft ein Bearbeitungszentrum und ein Verfahren zur Bearbeitung von Werkstücken von verschiedenen Werkstückchargen. Ferner betrifft die Erfindung eine Fertigungslinie. Darüber hinaus betrifft die Erfindung eine Steuerungseinheit zur Steuerung eines Bearbeitungszentrums.

Es sind Bearbeitungszentren zur Bearbeitung von Werkstücken bekannt. Zur Bearbeitung der Werkstücke umfassen diese Bearbeitungszentren mehrere Bearbeitungseinheiten. Die Werkstücke werden für die Bearbeitung zu Chargen zusammengefasst, wobei eine Charge Werkstücke mit derselben Werkstückhöhe umfasst. Existierende Bearbeitungszentren können lediglich mehrere Werkstücke derselben Charge bearbeiten, d. h. Werkstücke mit derselben Werkstückhöhe. Dies hat den Nachteil, dass bei einem Chargenwechsel der Takt in Fertigungslinien unterbrochen wird bis bei einem Chargenwechsel alle Werkstücke einer Werkstückcharge aus dem Bearbeitungszentrum gefahren sind.

Es ist daher eine Aufgabe der vorliegenden Erfindung eine Lösung bereitzustellen, welche die genannten Nachteile verringert oder beseitigt und/oder gegenüber existierenden Lösungen verbessert ist. Insbesondere ist es eine Aufgabe der vorliegenden Erfindung, ein Bearbeitungszentrum, ein Verfahren und eine Steuerungseinheit zur Bearbeitung von Werkstücken von verschiedenen Werkstückchargen sowie eine Fertigungslinie bereitzustellen, welche die genannten Nachteile verringern oder beseitigen und/oder gegenüber existierenden Lösungen verbessert sind. Insbesondere ist es eine Aufgabe der vorliegenden Erfindung ein Bearbeitungszentrum, ein Verfahren und eine Steuerungseinheit zur Bearbeitung von Werkstücken von verschiedenen Werkstückchargen sowie eine Fertigungslinie bereitzustellen, welche eine zeitgleiche Bearbeitung von Werkstücken verschiedener Chargen ermöglichen. Insbesondere ist es eine Aufgabe der vorliegenden Erfindung ein Bearbeitungszentrum, ein Verfahren und eine Steuerungseinheit zur Bearbeitung von Werkstücken von verschiedenen Werkstückchargen sowie eine Fertigungslinie bereitzustellen, welche eine unterbrechungsfreie Bearbeitung von Werkstücken bei einem Chargenwechsel ermöglichen.

Die Aufgabe wird gemäß einem ersten Aspekt der Erfindung nach Anspruch 1 durch ein Bearbeitungszentrum zur Bearbeitung von Werkstücken von verschiedenen Werkstückchargen gelöst. Das Bearbeitungszentrum ist insbesondere eine Holzbearbeitungsmaschine. Vorzugsweise ist die Holzbearbeitungsmaschine eine Schleifmaschine. Die Schleifmaschine ist vorzugsweise eine Breitbandschleifmaschine. Vorzugsweise ist das Bearbeitungszentrum zur schleifenden und/oder schneidenden Bearbeitung von Werkstücken ausgebildet.

Es ist vorgesehen, dass die Werkstücke einer Charge jeweils dieselbe Werkstückhöhe aufweisen. Ferner weisen die Werkstücke jeweils vorzugsweise eine konstante Werkstückhöhe auf. Vorzugsweise ist nicht vorgesehen, dass die Werkstückhöhe eines Werkstücks entlang und/oder quer zu einer Förderrichtung des Bearbeitungszentrums variiert. Es kann jedoch die Bearbeitung von Werkstücken bevorzugt sein, bei denen die Werkstückhöhe entlang und/oder quer zu der Förderrichtung des Bearbeitungszentrums variiert. Vorzugsweise kann die Zuordnung von Werkstücken mit einer variierenden Werkstückhöhe zu jener Charge erfolgen, deren Werkstückhöhe der maximalen Werkstückhöhe oder der minimalen Werkstückhöhe des Werkstücks mit der variierenden Werkstückhöhe entspricht. Insbesondere kann die Zuordnung von Werkstücken mit einer variierenden Werkstückhöhe zu jener Charge erfolgen, deren Werkstückhöhe der zu bearbeitenden Werkstückhöhe des Werkstücks mit der variierenden Werkstückhöhe entspricht.

Als Werkstücke kommen insbesondere plattenförmige und/oder quaderförmige Werkstücke in Betracht. Es kann bevorzugt sein, dass die Werkstücke in den dem Bearbeitungszentrum vorangehenden Bearbeitungsstationen bearbeitet worden sind. Beispielsweise können die Werkstücke in den dem Bearbeitungszentrum vorangehenden Bearbeitungsstationen lackiert und/oder es kann ein Oberflächenprofil eingebracht worden sein. Selbstverständlich können die Werkstücke in den dem Bearbeitungszentrum vorangehenden Bearbeitungsstationen ergänzenden oder alternativen Bearbeitungsprozessen unterzogen worden sein.

Das Bearbeitungszentrum umfasst einen Arbeitstisch mit einer Auflagefläche, eine Fördereinheit, eine erste Bearbeitungseinheit und eine zweite Bearbeitungseinheit sowie eine erste Höhenverstellantriebseinheit und eine zweite Höhenverstellantriebseinheit.

Zur Bearbeitung der Werkstücke der jeweiligen Werkstückcharge mit dem Bearbeitungszentrum liegen die Werkstücke der jeweiligen Werkstückcharge auf der Auflagefläche auf. Es ist hierbei zu verstehen, dass sich die Werkstückhöhe der Werkstücke der jeweiligen Werkstückcharge zur Bearbeitung hierbei vorzugsweise orthogonal zu der Auflagefläche bemisst und/oder sich die Werkstücke der jeweiligen Werkstückcharge zur Bearbeitung orthogonal zur Auflagefläche mit einer Werkstückhöhe erstrecken. Vorzugsweise ist die Auflagefläche während der Bearbeitung der Werkstücke nicht höhenverstellbar. Insbesondere ist es bevorzugt, dass die Auflagefläche während der Bearbeitung der Werkstücke quer zur Förderrichtung, insbesondere in einer Richtung orthogonal zur Auflagefläche, stationär angeordnet und/oder ausgebildet ist. Insbesondere ist es vorgesehen, dass die Auflagefläche zur Bearbeitung der Werkstücke nicht quer zur Förderrichtung, insbesondere in der Richtung orthogonal zur Auflagefläche, verstellbar angeordnet ist.

Es ist vorgesehen, dass die Fördereinheit die Auflagefläche mit einer Förderebene ausbildet. Die Fördereinheit ist ausgebildet, die Werkstücke zur Bearbeitung in der Förderrichtung von einem Maschineneinlauf zu einem Maschinenauslauf des Bearbeitungszentrums mit einem Vorschub zu transportieren, wobei dem Bearbeitungszentrum über den Maschineneinlauf Werkstücke zur Bearbeitung zugeführt werden und über den Maschinenauslauf die bearbeiteten Werkstücke aus dem Bearbeitungszentrum ausgeführt werden.

Vorzugsweise ist das Bearbeitungszentrum ein Teil einer Fertigungslinie, wobei in der Förderrichtung des Bearbeitungszentrums vor dem Bearbeitungszentrum mindestens eine vorgelagerte Bearbeitungsstation angeordnet ist und/oder in Förderrichtung hinter dem Bearbeitungszentrum mindestens eine nachgelagerte Bearbeitungsstation angeordnet ist. Insofern werden dem Bearbeitungszentrum am Maschineneinlauf die zu bearbeitenden Werkstücke von verschiedenen Werkstückchargen vorzugsweise von einer der vorgelagerten Bearbeitungsstationen bereitgestellt, insbesondere automatisiert bereitgestellt. Ferner ist es bevorzugt, dass das Bearbeitungszentrum am Maschinenauslauf die bearbeiteten Werkstücke von den verschiedenen Werkstückchargen einer der nachgelagerten Bearbeitungsstationen bereitstellt, insbesondere automatisiert bereitstellt.

Die erste Bearbeitungseinheit und die zweite Bearbeitungseinheit sind derart angeordnet, dass die zweite Bearbeitungseinheit in der Förderrichtung mit einem Bearbeitungseinheitenabstand hinter der ersten Bearbeitungseinheit angeordnet ist. Die erste Bearbeitungseinheit und die zweite Bearbeitungseinheit sind zur Bearbeitung der Werkstücke vorgesehen. Entsprechend weist die erste Bearbeitungseinheit einen ersten Werkzeugsatz auf und die zweite Bearbeitungseinheit weist einen zweiten Werkzeugsatz auf. Der erste und/oder zweite Werkzeugsatz umfasst oder ist beispielsweise eine Tellerbürste, ein Schleifband, eine Bürstenrolle, eine Scheibenbürste, ein Bürstenband, eine Bandsäge, eine Messerwelle, eine Stachelwalze, etc.

Vorzugsweise umfasst oder ist die erste Bearbeitungseinheit und/oder die zweite Bearbeitungseinheit ein Querschleifaggregat, ein Längsschleifaggregat, ein Bürstenaggregat zum Reinigen, ein Bürstenaggregat zum Satinieren, ein Scheibenbürstaggregat, ein Bürstrollenaggregat zum Texturieren, ein Bürstbandaggregat zum Texturieren, ein Bandsägeaggregat zum Texturieren, ein Messerwellenaggregat und/oder ein Stachelwalzenaggregat. Das Schleifband eines Längsschleifaggregats und/oder Messerwellenaggregats und/oder Stachelwalzenaggregats kann mit dem Vorschub im Gegenlauf oder Gleichlauf drehen. DIN EN ISO 19085-8 zeigt die verschiedenen Schleifaggregate einer Breitbandschleifmaschine.

Vorzugsweise weist das Bearbeitungszentrum mehr als zwei Bearbeitungseinheiten auf. Insbesondere ist es bevorzugt, dass mindestens zwei, vorzugsweise mehrere Bearbeitungseinheiten unterschiedliche Aggregate umfassen oder sind. Insbesondere ist es bevorzugt, die Anzahl und die Art der Bearbeitungseinheiten an die Bearbeitungsaufgabe anzupassen. Die Bearbeitungseinheiten sind vorzugsweise analog zur ersten und/oder zweiten Bearbeitungseinheit ausgebildet. Vorzugsweise sind die mehreren Bearbeitungseinheiten in der Förderrichtung beabstandet zueinander angeordnet. Die mehreren Bearbeitungseinheiten sind in bevorzugter Weise unabhängig voneinander ansteuerbar. Insbesondere bilden die Bearbeitungseinheiten jeweils eine Bearbeitungsebene aus, deren Abstand gegenüber der Förderebene jeweils unabhängig von einander in Abhängigkeit der zu bearbeitenden Werkstückcharge eingestellt werden kann.

Die erste Bearbeitungseinheit bildet einen ersten Bearbeitungsabschnitt aus, an dem der erste Werkzeugsatz zur Bearbeitung der Werkstücke angeordnet ist. Der erste Werkzeugsatz ist derart angeordnet, dass er eine erste Bearbeitungsebene definiert, welche sich parallel zu der Förderebene erstreckt. Entsprechend bildet die zweite Bearbeitungseinheit einen zweiten Bearbeitungsabschnitt aus, an dem der zweite Werkzeugsatz zur Bearbeitung der Werkstücke angeordnet ist, wobei der zweite Werkzeugsatz derart angeordnet ist, dass er eine zweite Bearbeitungsebene definiert, welche sich parallel zu der Förderebene erstreckt.

Die erste Bearbeitungseinheit und die zweite Bearbeitungseinheit sind gegenüber der Auflagefläche verstellbar angeordnet, so dass die erste Bearbeitungsebene und die Förderebene mit einem ersten Abstand zueinander beabstandet angeordnet sind und die zweite Bearbeitungsebene und die Förderebene mit einem zweiten Abstand zueinander beabstandet angeordnet sind. Die erste Bearbeitungseinheit ist gegenüber der Auflagefläche in einer solchen Weise verstellbar, dass der erste Abstand zwischen einem ersten Minimalabstand und einem von dem ersten Minimalabstand verschiedenen ersten Maximalabstand einstellbar ist. Der erste Minimalabstand ist in bevorzugter Weise kleiner als der erste Maximalabstand. Die zweite Bearbeitungseinheit ist gegenüber der Auflagefläche in einer solchen Weise verstellbar, dass der zweite Abstand zwischen einem zweiten Minimalabstand und einem von dem zweiten Minimalabstand verschiedenen zweiten Maximalabstand einstellbar ist. Der zweite Minimalabstand ist in bevorzugter Weise kleiner als der zweite Maximalabstand. Vorzugsweise entspricht der erste Minimalabstand dem zweiten Minimalabstand. Ergänzend oder alternativ entspricht der erste Maximalabstand dem zweiten Maximalabstand.

Für die Einstellung des ersten Abstands und des zweiten Abstands umfasst das Bearbeitungszentrum die erste Höhenverstellantriebseinheit und die zweite Höhenverstellantriebseinheit. Die erste Höhenverstellantriebseinheit ist angeordnet und dazu ausgebildet, die erste Bearbeitungseinheit gegenüber der Auflagefläche in einer solchen Weise zu verstellen, dass der erste Abstand zwischen dem ersten Minimalabstand und dem ersten Maximalabstand einstellbar ist. Ergänzend ist die zweite Höhenverstellantriebseinheit angeordnet und dazu ausgebildet, die zweite Bearbeitungseinheit gegenüber der Auflagefläche in einer solchen Weise zu verstellen, dass der zweite Abstand zwischen dem zweiten Minimalabstand und dem zweiten Maximalabstand einstellbar ist.

Es ist zur Bearbeitung von Werkstücken von verschiedenen Werkstückchargen vorgesehen, dass der erste Abstand und der zweite Abstand derart einstellbar sind, dass zur zeitgleichen Bearbeitung von mehreren Chargen mit unterschiedlichen Werkstückhöhen der erste Abstand von dem zweiten Abstand verschieden einstellbar ist. Insbesondere können der erste Abstand und der zweite Abstand unabhängig voneinander eingestellt werden.

Dies ermöglicht nach der Erkenntnis des Erfinders eine gleichzeitige Bearbeitung von Werkstücken von zwei oder mehreren Chargen mit unterschiedlichen Werkstückhöhen auf dem Bearbeitungszentrum. Insbesondere ermöglicht die erfindungsgemäße Lösung die Bearbeitung von Werkstücken mit einer Werkstückhöhe an der ersten Bearbeitungseinheit mit dem ersten Abstand und eine Bearbeitung von Werkstücken mit einer anderen Werkstückhöhe an der zweiten Bearbeitungseinheit mit dem zweiten Abstand. Beispielsweise kann der zweite Abstand der zweiten Bearbeitungseinheit für die Bearbeitung der Werkstücke einer ersten Werkstückcharge mit einer ersten Werkstückhöhe eingestellt werden und der erste Abstand der ersten Bearbeitungseinheit für die Bearbeitung der Werkstücke einer zweiten Charge mit einer zweiten Werkstückhöhe eingestellt werden. Dies setzt selbstverständlich voraus, dass die Bearbeitung der ersten Charge an der ersten Bearbeitungseinheit bereits abgeschlossen ist.

Ferner ermöglicht das erfindungsgemäße Bearbeitungszentrum eine Bearbeitung der Werkstücke von verschiedenen Werkstückchargen mit unterschiedlichen Werkstückhöhen im Takt einer Fertigungslinie. Ist beispielsweise eine Lackierspritzmaschine eine vorgelagerte Bearbeitungsstation des erfindungsgemäßen Bearbeitungszentrums, ermöglicht das erfindungsgemäße Bearbeitungszentrum eine unterbrechungsfreie Bearbeitung von Werkstücken von verschiedenen Werkstückchargen mit verschiedenen Werkstückhöhen, d. h. der Vorschub des Bearbeitungszentrums muss nicht gestoppt werden. Im Vergleich zu bekannten Lösungen ist es somit nicht erforderlich, zunächst die Bearbeitung von Werkstücken einer Werkstückcharge abzuschließen und das Bearbeitungszentraum entsprechend "leerlaufen zu lassen", was einer Unterbrechung des Linientakts gleichkommt oder aber von den vorgelagerten Bearbeitungsstationen ggf. eine Produktion in ein (Zwischen-)Lager erfordert. Entsprechendes gilt, wenn eine dem erfindungsgemäßen Bearbeitungszentrum nachgelagerte Bearbeitungsstation eine Lackierspritzmaschine ist.

Schließlich hat das erfindungsgemäße Bearbeitungszentrum den Vorteil, dass während der Bearbeitung von Werkstücken von verschiedenen Werkstückchargen keine Höhenverstellung der Auflagefläche erforderlich ist. Insbesondere kann die Auflagefläche des Arbeitstisches in einer solchen Weise gewählt werden, dass während der Bearbeitung von Werkstücken von verschiedenen Werkstückchargen die Höhe der Auflagefläche der Höhe der Auflageflächen der vorgelagert und/oder nachgelagert angeordneten Bearbeitungsstation entspricht. Dies ermöglicht oder erleichtert zumindest eine automatisierte Übergabe der Werkstücke von der vorgelagerten Bearbeitungsstation zu dem erfindungsgemäßen Bearbeitungszentrum bzw. von dem erfindungsgemäßen Bearbeitungszentrum zu der nachgelagert angeordneten Bearbeitungsstation. In der Folge ist hierdurch eine zuverlässigere und schnellere Bearbeitung der Werkstücke möglich.

Zu den Vorteilen, Ausführungsvarianten und Ausführungsdetails dieses Aspekts der Erfindung und ihrer Fortbildungen wird auch auf die nachfolgende Beschreibung zu den entsprechenden Merkmalen der jeweiligen anderen Aspekte und deren Fortbildungen verwiesen.

Gemäß einer bevorzugten Ausführungsform des Bearbeitungszentrums ist vorgesehen, dass die erste Bearbeitungseinheit zwischen der ersten Bearbeitungsebene und der Förderebene einen ersten Arbeitsraum ausbildet, der sich in der Förderrichtung mit einer ersten Raumlänge erstreckt, und/oder die zweite Bearbeitungseinheit zwischen der zweiten Bearbeitungsebene und der Förderebene einen zweiten Arbeitsraum ausbildet, der sich in der Förderrichtung mit einer zweiten Raumlänge erstreckt, und/oder die jeweiligen Werkstückchargen sich in der Förderrichtung mit einer Chargenlänge erstrecken.

Es ist bevorzugt, dass der erste bzw. zweite Abstand der ersten bzw. zweiten Bearbeitungseinheit nur dann zur Bearbeitung von Werkstücken von einer Werkstückcharge verändert wird, d. h. an die Werkstückhöhe der Werkstückcharge der zu bearbeitenden Werkstücke angepasst wird, wenn der erste bzw. zweite Arbeitsraum nicht bereits durch Werkstücke einer anderen Werkstückcharge belegt ist. Vorzugsweise entspricht die Arbeitsraumlänge des jeweiligen Arbeitsraums einer Breite der jeweiligen Bearbeitungseinheit in der Förderrichtung. Alternativ kann es bevorzugt sein, dass die Arbeitsraumlänge des jeweiligen Arbeitsraums größer ist als die Breite der jeweiligen Bearbeitungseinheit in der Förderrichtung. Ferner kann es bevorzugt sein, dass die Arbeitsraumlänge des jeweiligen Arbeitsraums dem Bearbeitungsabschnitt oder dem Werkzeugsatz der jeweiligen Bearbeitungseinheit in der Förderrichtung entspricht.

Vorzugsweise erstrecken sich der erste und zweite Arbeitsraum orthogonal zu der Förderrichtung über die Breite der Auflagefläche. Ferner kann es bevorzugt sein, dass sich der erste und zweite Arbeitsraum orthogonal zu der Förderrichtung über die Breite des Bearbeitungsabschnitts oder des Werkzeugsatzes der jeweiligen Bearbeitungseinheit erstrecken.

Vorzugsweise entspricht die Höhe des ersten Arbeitsraums dem ersten Abstand und/oder die Höhe des zweiten Arbeitsraums dem zweiten Abstand.

Die Chargenlänge ist vorzugsweise der Abstand zwischen dem in Förderrichtung ersten Werkstück und dem in Förderrichtung letzten Werkstück einer Gruppe von Werkstücken, welche dieselbe Werkstückhöhe aufweisen. Insbesondere ist die Chargenlänge der Abstand zwischen einer in Förderrichtung vorderen Kante des in Förderrichtung ersten Werkstücks und einer in Förderrichtung hinteren Kante des in Förderrichtung letzten Werkstücks einer Gruppe von Werkstücken, welche dieselbe Werkstückhöhe aufweisen. Es kann bevorzugt sein, dass mehrere oder alle Werkstücke einer Werkstückcharge in Förderrichtung beabstandet zueinander angeordnet sind. Ergänzend oder alternativ kann es bevorzugt sein, dass mehrere oder alle Werkstücke einer Werkstückcharge in Förderrichtung Stoß an Stoß zueinander angeordnet sind.

Ferner ist nach einer bevorzugten Fortbildung vorgesehen, dass das Bearbeitungszentrum eine Einlauf-Chargendetektionsvorrichtung zur Höhenmessung der am Maschineneinlauf zur Bearbeitung zugeführten Werkstücke einer Werkstückcharge, und/oder eine Auslauf-Chargendetektionsvorrichtung zur Höhenmessung der am Maschinenauslauf ausgeführten Werkstücke einer Werkstückcharge, und/oder eine in der Förderrichtung vor der ersten Bearbeitungseinheit angeordnete erste Chargendetektionsvorrichtung zur Höhenmessung der der ersten Bearbeitungseinheit zur Bearbeitung zuzuführenden Werkstücke einer Werkstückcharge, und/oder eine in der Förderrichtung vor der zweiten Bearbeitungseinheit und/oder nach der ersten Bearbeitungseinheit angeordnete zweite Chargendetektionsvorrichtung zur Höhenmessung der der zweiten Bearbeitungseinheit zur Bearbeitung zuzuführenden Werkstücke einer Werkstückcharge umfasst.

Ferner ist es bevorzugt, dass die Einlauf-Chargendetektionsvorrichtung und/oder die Auslauf-Chargendetektionsvorrichtung und/oder die erste Chargendetektionsvorrichtung und/oder die zweite Chargendetektionsvorrichtung ausgebildet sind, die Chargenlänge der Werkstückcharge zu erfassen und/oder das Vorhandensein und/oder die Abwesenheit von Werkstücken einer Werkstückcharge zu erfassen.

Die Einlauf-Chargendetektionsvorrichtung und/oder die Auslauf-Chargendetektionsvorrichtung und/oder die erste Chargendetektionsvorrichtung und/oder die zweite Chargendetektionsvorrichtung sind vorzugsweise im Betriebszustand oberhalb der Auflagefläche angeordnet. Alternativ kann es bevorzugt sein, dass die Einlauf-Chargendetektionsvorrichtung und/oder die Auslauf-Chargendetektionsvorrichtung und/oder die erste Chargendetektionsvorrichtung und/oder die zweite Chargendetektionsvorrichtung vorzugsweise im Betriebszustand unterhalb der Auflagefläche angeordnet sind. Ferner kann es alternativ bevorzugt sein, dass die Einlauf-Chargendetektionsvorrichtung und/oder die Auslauf-Chargendetektionsvorrichtung und/oder die erste Chargendetektionsvorrichtung und/oder die zweite Chargendetektionsvorrichtung vorzugsweise im Betriebszustand oberhalb und unterhalb der Auflagefläche angeordnet sind.

Vorzugsweise ist die Einlauf-Chargendetektionsvorrichtung im Bereich des Maschineneinlaufs angeordnet. Insbesondere kann es bevorzugt sein, dass die Einlauf-Chargendetektionsvorrichtung die dem Bearbeitungszentrum zuzuführenden Werkstücke in Förderrichtung vor dem Maschineneinlauf erfasst. Dies ermöglicht beispielsweise, dass die Zufuhr der zu bearbeitenden Werkstücke zu dem Bearbeitungszentrum unterbrochen werden kann, um einen Mindestabstand zwischen zwei aufeinander folgenden Werkstückchargen einzuhalten.

Vorzugsweise ist die Auslauf-Chargendetektionsvorrichtung im Bereich des Maschinenauslaufs angeordnet. Insbesondere kann es bevorzugt sein, dass die Auslauf-Chargendetektionsvorrichtung die aus dem Bearbeitungszentrum auszuführenden Werkstücke in Förderrichtung hinter dem Maschinenauslauf erfasst. Ergänzend oder alternativ kann es bevorzugt sein, dass die Auslauf-Chargendetektionsvorrichtung die aus dem Bearbeitungszentrum auszuführenden Werkstücke in Förderrichtung vor und/oder dem Maschinenauslauf erfasst.

Die erste Chargendetektionsvorrichtung ist vorzugsweise zwischen der Einlauf-Chargendetektionsvorrichtung und der ersten Bearbeitungseinheit angeordnet. Insbesondere kann es bevorzugt sein, dass die erste Chargendetektionsvorrichtung an oder im Bereich der ersten Bearbeitungseinheit angeordnet ist. Vorzugsweise erfasst die erste Chargendetektionsvorrichtung die dem Bearbeitungszentrum zugeführten und der ersten Bearbeitungseinheit zuzuführenden Werkstücke.

Die zweite Chargendetektionsvorrichtung ist vorzugsweise zwischen der ersten Bearbeitungseinheit und der zweiten Bearbeitungseinheit angeordnet. Insbesondere kann es bevorzugt sein, dass die zweite Chargendetektionsvorrichtung an oder im Bereich der zweiten Bearbeitungseinheit angeordnet ist. Vorzugsweise erfasst die zweite Chargendetektionsvorrichtung die aus der ersten Bearbeitungseinheit ausgeführten und der zweiten Bearbeitungseinheit zuzuführenden Werkstücke.

Die Einlauf-Chargendetektionsvorrichtung und/oder die Auslauf-Chargendetektionsvorrichtung und/oder die erste Chargendetektionsvorrichtung und/oder die zweite Chargendetektionsvorrichtung sind oder umfassen vorzugsweise optische Sensoren, insbesondere eine oder mehrere Kameras, und/oder mechanische Sensoren, insbesondere mechanische Anschläge. Ergänzend oder alternativ können die Einlauf-Chargendetektionsvorrichtung und/oder die Auslauf-Chargendetektionsvorrichtung und/oder die erste Chargendetektionsvorrichtung und/oder die zweite Chargendetektionsvorrichtung insbesondere Ultraschallsensoren, kapazitive und/oder induktive Sensoren und/oder Laser-Distanzmesser umfassen. Prinzipiell können die Einlauf-Chargendetektionsvorrichtung und/oder die Auslauf-Chargendetektionsvorrichtung und/oder die erste Chargendetektionsvorrichtung und/oder die zweite Chargendetektionsvorrichtung jegliche Sensoren umfassen, welche dazu geeignet sind, die Werkstückhöhe und/oder die Präsenz von Werkstücken und/oder die Chargenlänge zu erfassen.

Weiterhin ist gemäß einer bevorzugten Ausführungsform des Bearbeitungszentrums vorgesehen, dass der erste Abstand in Abhängigkeit der durch die Einlauf-Chargendetektionsvorrichtung erfassten Werkstückcharge, und/oder in Abhängigkeit der durch die erste Chargendetektionsvorrichtung erfassten Werkstückhöhe des durch die erste Bearbeitungseinheit zu bearbeitenden Werkstücks, und/oder in Abhängigkeit des Vorschubs, und/oder in Abhängigkeit des Bearbeitungseinheitenabstands, eingestellt wird, wobei der erste Abstand vorzugsweise der erfassten Werkstückhöhe abzüglich einer ersten Bearbeitungstiefe entspricht. Dies ermöglicht in bevorzugter Weise ein automatisiertes Verstellen des ersten Abstands in Abhängigkeit der mit der ersten Bearbeitungseinheit zu bearbeitenden Werkstücke einer Werkstückcharge.

Ergänzend oder alternativ ist gemäß einer bevorzugten Ausführungsform des Bearbeitungszentrums vorgesehen, dass der zweite Abstand in Abhängigkeit der durch die Einlauf-Chargendetektionsvorrichtung erfassten Werkstückcharge, und/oder in Abhängigkeit der durch die zweite Chargendetektionsvorrichtung erfassten Werkstückhöhe des durch die zweite Bearbeitungseinheit zu bearbeitenden Werkstücks, und/oder in Abhängigkeit des Vorschubs, und/oder in Abhängigkeit des Bearbeitungseinheitenabstands, eingestellt wird, wobei der zweite Abstand vorzugsweise der erfassten Werkstückhöhe abzüglich einer zweiten Bearbeitungstiefe entspricht. Dies ermöglicht in bevorzugter Weise ein automatisiertes Verstellen des zweiten Abstands in Abhängigkeit der mit der zweiten Bearbeitungseinheit zu bearbeitenden Werkstücke einer Werkstückcharge.

Nach einer weiteren bevorzugten Fortbildung des Bearbeitungszentrums ist vorgesehen, dass die Fördereinheit aufweist: ein Förderband und/oder Förderteppich, und eine am Maschineneinlauf angeordnete erste angetriebene Stützwalze und/oder eine am Maschinenauslauf angeordnete zweite angetriebene Stützwalze, wobei die erste und/oder die zweite Stützwalze mit dem Förderband und/oder dem Förderteppich gekoppelt und ausgebildet sind, das Förderband und/oder den Förderteppich zum Transport der Werkstücke anzutreiben.

Es ist vorzugsweise vorgesehen, dass das Förderband und/oder der Förderteppich in Förderrichtung endlos um die erste und/oder zweite angetriebene Stützwalze laufen. Es ist bevorzugt vorgesehen, dass die erste und/oder zweite angetriebene Stützwalze das Förderband und/oder den Förderteppich zum Transport der zu bearbeitenden Werkstücke vom Maschineneinlauf zum Maschinenauslauf antreiben. Vorzugsweise werden die erste und/oder zweite angetriebene Stützwalze durch einen oder mehrere entsprechende Motoren, insbesondere Elektromotoren, angetrieben.

Es ist in bevorzugter Weise vorgesehen, dass die erste Stützwalze am oder im Bereich des Maschineneinlaufs angeordnet ist. Ergänzend oder alternativ ist die zweite Stützwalze am oder im Bereich des Maschinenauslaufs angeordnet. Vorzugsweise erstreckt sich das Förderband und/oder der Förderteppich bei einer Bewegung in der Förderrichtung in der Förderebene und/oder bildet die Auflagefläche.

Weiterhin ist nach einer bevorzugten Ausführungsform des Bearbeitungszentrums vorgesehen, dass die Fördereinheit ausgebildet ist, die Werkstücke in Förderrichtung mit einem Vorschub von mindestens 0,5 m/min, vorzugsweise von mindestens 1 m/min, und/oder mit einem Vorschub von maximal 20 m/min, vorzugsweise von maximal 15 m/min, zu transportieren. Dieser Vorschub ermöglicht auch dann noch eine ausreichend schnelle und ausreichend genaue Bearbeitung der Werkstücke, wenn der erste und/oder zweite Abstand der ersten und/oder zweiten Bearbeitungseinheit in Abhängigkeit der zu bearbeitenden Werkstückchargen eingestellt werden muss.

Gemäß einer weiteren bevorzugten Fortbildung des Bearbeitungszentrums ist vorgesehen, dass der erste Minimalabstand 0,5 mm, vorzugsweise 1 mm ist, und/oder der erste Maximalabstand 200 mm, vorzugsweise 300 mm ist, und/oder der zweite Minimalabstand 0,5 mm, vorzugsweise 1 mm ist, und/oder der zweite Maximalabstand 200 mm, vorzugsweise 300 mm ist. Dieser Minimal- und Maximalabstand ermöglicht auch dann noch eine ausreichend schnelle und ausreichend genaue Bearbeitung der Werkstücke, wenn der erste und/oder zweite Abstand der ersten und/oder zweiten Bearbeitungseinheit in Abhängigkeit der zu bearbeitenden Werkstückchargen eingestellt werden muss.

Ferner ist gemäß einer bevorzugten Ausführungsform des Bearbeitungszentrums vorgesehen, dass die erste Höhenverstellantriebseinheit einen ersten Servoantrieb, insbesondere einen ersten Hochgeschwindigkeits-Servoantrieb, der mit mindestens einer ersten Kugelumlaufspindel gekoppelt ist, umfasst, und/oder die zweite Höhenverstellantriebseinheit einen zweiten Servoantrieb, insbesondere einen zweiten Hochgeschwindigkeits-Servoantrieb, der mit mindestens einer zweiten Kugelumlaufspindel gekoppelt ist, umfasst. Diese Kombination aus Servoantrieb und Kugelumlaufspindel ermöglicht auch dann noch eine ausreichend schnelle und ausreichend genaue Bearbeitung der Werkstücke, wenn der erste und/oder zweite Abstand der ersten und/oder zweiten Bearbeitungseinheit in Abhängigkeit der zu bearbeitenden Werkstückchargen eingestellt werden muss.

Nach einer weiteren bevorzugten Fortbildung des Bearbeitungszentrums ist vorgesehen, dass ein Absolutwert der Differenz zwischen dem ersten Abstand und dem zweiten Abstand größer als eine Differenzuntergrenze ist und/oder kleiner als eine Differenzobergrenze ist, wobei die Differenzobergrenze größer ist als die Differenzuntergrenze. Vorzugsweise liegt die Differenzobergrenze bei maximal 100 mm, 150 mm, 200 mm oder 250 mm. Insbesondere liegt die Differenzobergrenze bei maximal 147 mm. Ergänzend oder alternativ liegt die Differenzuntergrenze bei mindestens 0 mm.

Diese Kombination aus Servoantrieb und Kugelumlaufspindel ermöglicht auch dann noch eine ausreichend schnelle und ausreichend genaue Bearbeitung der Werkstücke, wenn der erste und/oder zweite Abstand der ersten und/oder zweiten Bearbeitungseinheit in Abhängigkeit der zu bearbeitenden Werkstückchargen eingestellt werden muss.

Weiterhin ist gemäß einer bevorzugten Ausführungsform des Bearbeitungszentrums vorgesehen, dass in der Förderrichtung vor der ersten Bearbeitungseinheit eine erste Übermaßschutzvorrichtung angeordnet ist, wobei die erste Übermaßschutzvorrichtung vorzugsweise die erste Chargendetektionsvorrichtung ist oder umfasst, und/oder in der Förderrichtung vor der zweiten Bearbeitungseinheit eine zweite Übermaßschutzvorrichtung angeordnet ist, wobei die zweite Übermaßschutzvorrichtung vorzugsweise die zweite Chargendetektionsvorrichtung ist oder umfasst. Insbesondere kann es bevorzugt sein, dass die erste und/oder zweite Übermaßschutzvorrichtung ein mechanischer Anschlag ist oder einen mechanischen Anschlag umfasst. Die erste und/oder zweite Übermaßschutzvorrichtung verhindert eine Kollision des Werkstücks mit der entsprechenden Bearbeitungseinheit.

Nach einer weiteren bevorzugten Fortbildung umfasst das Bearbeitungszentrum eine Steuerungseinheit, insbesondere eine Steuerungseinheit, wie sie unten gemäß dem vierten Aspekt der Erfindung beschrieben wird, wobei die Steuerungseinheit signaltechnisch gekoppelt ist, mit der ersten Bearbeitungseinheit, und/oder der zweiten Bearbeitungseinheit, und/oder der Fördervorrichtung, insbesondere der ersten und/oder zweiten angetriebenen Stützwalze, und/oder der ersten Höhenverstellantriebseinheit, insbesondere dem ersten Servoantrieb, der zweiten Höhenverstellantriebseinheit, insbesondere dem zweiten Servoantrieb, und/oder der Einlauf-Chargendetektionsvorrichtung, und/oder der Auslauf-Chargendetektionsvorrichtung, und/oder der ersten erste Chargendetektionsvorrichtung, und/oder der zweiten Chargendetektionsvorrichtung, und/oder der ersten Übermaßschutzvorrichtung, und/oder der zweiten Übermaßschutzvorrichtung. Dies hat den Vorteil, dass der erste Abstand und/oder der zweite Abstand und/oder der Vorschub des Bearbeitungszentrums automatisiert eingestellt werden kann. Insbesondere kann die Bearbeitung von Werkstücken von verschiedenen Werkstückchargen automatisiert und zeitgleich auf dem Bearbeitungszentrum erfolgen. Insbesondere ermöglicht dies eine automatisierte Bearbeitung von Werkstücken von verschiedenen Werkstückchargen in einem Takt einer Fertigungslinie.

Die Aufgabe wird gemäß einem zweiten Aspekt der Erfindung durch eine Fertigungslinie nach Anspruch 12 gelöst. Die Fertigungslinie umfasst ein zuvor beschriebenes Bearbeitungszentrum zur Bearbeitung von Werkstücken von verschiedenen Chargen gemäß dem ersten Aspekt oder möglicher Ausführungsformen des ersten Aspekts, und eine dem Bearbeitungszentrum vorgelagert angeordnete Bearbeitungsstation, wobei die vorgelagert angeordnete Bearbeitungsstation vorzugsweise eine Lackierstation zum Lackieren der mit dem Bearbeitungszentrum zu bearbeitenden Werkstücke ist, und eine dem Bearbeitungszentrum nachgelagert angeordnete Bearbeitungsstation, wobei die nachgelagert angeordnete Bearbeitungsstation vorzugsweise eine Lackierstation zum Lackieren der von dem Bearbeitungszentrum bearbeiteten Werkstücke ist, wobei vorzugsweise die Auflagefläche der Bearbeitungsmaschine während der Bearbeitung von Werkstücken von verschiedenen Chargen in einer Ebene liegt, in der die vorgelagert angeordnete Bearbeitungsstation Werkstücke von verschiedenen Chargen für die Bearbeitung mit dem Bearbeitungszentrum ausgibt, und/oder die nachgelagert angeordnete Bearbeitungsstation die von dem Bearbeitungszentrum bearbeiteten Werkstücke von verschiedenen Chargen aufnimmt.

Die Aufgabe wird gemäß einem dritten Aspekt der Erfindung durch ein Verfahren zur Bearbeitung von Werkstücken von verschiedenen Chargen mit einem Bearbeitungszentrum nach Anspruch 13 gelöst. Insbesondere betrifft der dritte Aspekt der Erfindung ein Verfahren zur Bearbeitung von Werkstücken von verschiedenen Chargen mit einem zuvor beschriebenen Bearbeitungszentrum gemäß dem ersten Aspekt oder möglichen Ausführungsformen des ersten Aspekts. Das Verfahren ist insbesondere ein Verfahren zur schleifenden Bearbeitung von Werkstücken.

Das Verfahren umfassend die Schritte: Bestimmen eines ersten Einlauf-Signals, welches einer mit einer Einlauf-Chargendetektionsvorrichtung erfassten ersten Werkstückhöhe einer am Maschineneinlauf zugeführten ersten Werkstückcharge entspricht, und/oder einer ersten Chargenlänge der zugeführten ersten Werkstückcharge entspricht, Bestimmen eines zweiten Einlauf-Signals, welches einer mit der Einlauf-Chargendetektionsvorrichtung erfassten zweiten Werkstückhöhe einer am Maschineneinlauf zugeführten zweiten Werkstückcharge entspricht, und/oder einer zweiten Chargenlänge der zugeführten zweiten Werkstückcharge entspricht, wobei die zweite Werkstückcharge in einer Förderrichtung des Bearbeitungszentrums hinter der ersten Werkstückcharge angeordnet ist, Bestimmen eines Vorschubs einer Fördereinheit, mit dem die Werkstückchargen zur Bearbeitung mit dem Bearbeitungszentrum in einer Förderebene von einem Maschineneinlauf zu einem Maschinenauslauf transportiert werden, Einstellen eines ersten Abstands einer ersten Bearbeitungseinheit, wobei die erste Bearbeitungsebene und die Förderebene mit einem ersten Abstand zueinander beabstandet einstellbar angeordnet sind in Abhängigkeit des bestimmten Vorschubs und der bestimmten ersten Chargenlänge und/oder der bestimmten zweiten Chargenlänge, und/oder Einstellen eines zweiten Abstands einer zweiten Bearbeitungseinheit, wobei die zweite Bearbeitungsebene und die Förderebene mit einem zweiten Abstand zueinander beabstandet angeordnet sind in Abhängigkeit des bestimmten Vorschubs und der bestimmten ersten Chargenlänge und/oder der bestimmten zweiten Chargenlänge.

Gemäß einer bevorzugten Ausführungsform umfasst das Verfahren folgende Schritte: Bestimmen einer Höhendifferenz zwischen der aufeinander folgenden ersten und zweiten Charge basierend auf dem bestimmten ersten Einlauf-Signal und bestimmten zweiten Einlauf-Signal, Bestimmen eines Chargenabstands zwischen der aufeinander folgenden ersten und zweiten Charge basierend auf dem bestimmten ersten und zweiten Einlauf-Signal, Bestimmen einer ersten Einstellgeschwindigkeit einer ersten Höhenverstellantriebseinheit, und/oder Bestimmen einer zweiten Einstellgeschwindigkeit einer zweiten Höhenverstellantriebseinheit, wobei der Schritt des Bestimmens des Vorschubs bestimmt wird in Abhängigkeit von der bestimmten Höhendifferenz, und/oder dem bestimmten Chargenabstand, und/oder der ersten Einstellgeschwindigkeit, und/oder der zweiten Einstellgeschwindigkeit.

Nach einer ferner bevorzugten Fortbildung umfasst das Verfahren folgende Schritte: Bestimmen einer größten Arbeitsraumlänge aus einer ersten Arbeitsraumlänge einer ersten Bearbeitungseinheit und einer zweiten Arbeitsraumlänge einer zweiten Bearbeitungseinheit, Bestimmen einer Höhendifferenz zwischen der aufeinander folgenden ersten und zweiten Charge basierend auf dem bestimmten ersten Einlauf-Signal und bestimmten zweiten Einlauf-Signal, Bestimmen eines Chargenabstands zwischen der aufeinander folgenden ersten und zweiten Charge basierend auf dem bestimmten ersten und zweiten Einlauf-Signal, Bestimmen eines Mindestchargenabstands zwischen der aufeinander folgenden ersten und zweiten Charge, wobei der Mindestchargenabstand einer Summe aus der bestimmten größten Arbeitsraumlänge und dem Produkt aus dem bestimmten Vorschub der bestimmten Höhendifferenz geteilt durch einer Verstellgeschwindigkeit einer ersten Höhenverstellantriebseinheit und/oder einer zweiten Höhenverstellantriebseinheit entspricht, Vergleichen des bestimmten Mindestchargenabstands mit dem bestimmten Chargenabstand, Stoppen der Bearbeitung durch das Bearbeitungszentrum, wenn der bestimmte Chargenabstand kleiner ist als der bestimmte Mindestchargenabstand.

Die Aufgabe wird gemäß einem vierten Aspekt der Erfindung durch eine Steuerungseinheit zur Steuerung eines zuvor beschriebenen Bearbeitungszentrums nach dem ersten Aspekt oder bevorzugten Fortbildungen des ersten Aspekts gelöst, wobei die Steuerungseinheit ausgebildet ist, das Verfahren nach dem dritten Aspekt oder bevorzugten Fortbildungen des dritten Aspekts auszuführen.

Zu den Vorteilen, Ausführungsvarianten und Ausführungsdetails dieser weiteren Aspekte der Erfindung und ihrer Fortbildungen wird auch auf die vorangegangene Beschreibung zu den entsprechenden Merkmalen des Bearbeitungszentrums der jeweiligen anderen Aspekte verwiesen.

Ausführungsformen der Erfindung werden nun nachfolgend anhand der Zeichnungen beschrieben. Diese sollen die Ausführungsformen nicht notwendigerweise maßstäblich darstellen, vielmehr sind die Zeichnungen, wenn dies zur Erläuterung dienlich ist, in schematisierter und/oder leicht verzerrter Form ausgeführt. Im Hinblick auf Ergänzungen der aus den Zeichnungen unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in den Zeichnungen sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, den Zeichnungen und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsformen oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsformen sowie anhand der Zeichnungen; diese zeigen in:
- Fig. 1:: schematisch ein Bearbeitungszentrum gemäß einer bevorzugten Ausführungsform;
- Fig. 2a, b:: schematisch Werkstücke einer ersten Werkstückcharge und einer zweiten Werkstückcharge in einer Seiten- und einer Draufsicht;
- Fig. 3:: schematisch eine Fertigungslinie mit einem Bearbeitungszentrum wie dies in Figur 1 schematisch dargestellt ist;
- Fig. 4-7:: exemplarisch die Bearbeitung von Werkstücken von verschiedenen Werkstückchargen an dem in Figur 1 schematisch dargestellten Bearbeitungszentrum; und
- Fig. 8:: ein schematisches Blockdiagramm einer bevorzugten Ausführungsform eines Verfahrens zur Bearbeitung von Werkstücken von verschiedenen Werkstückchargen.

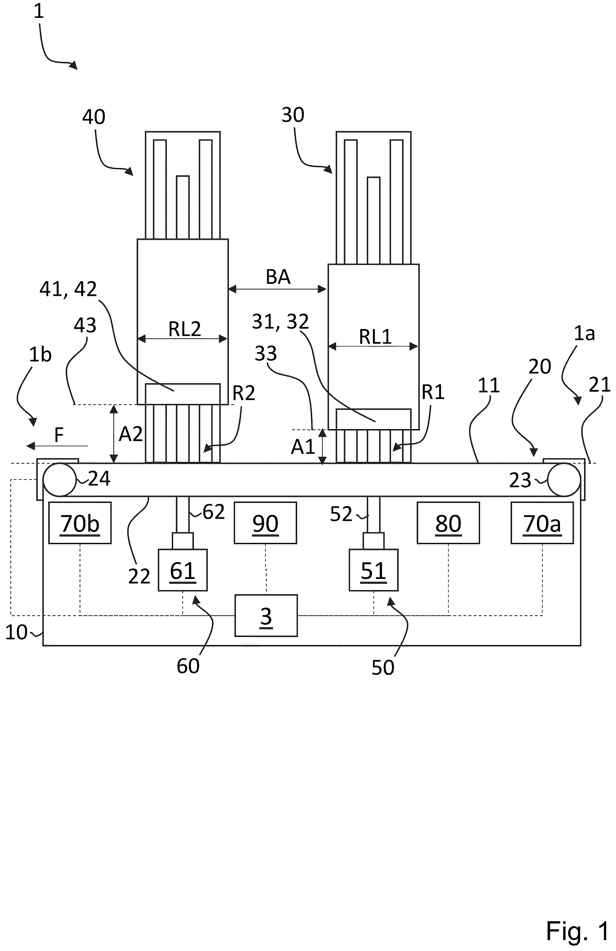

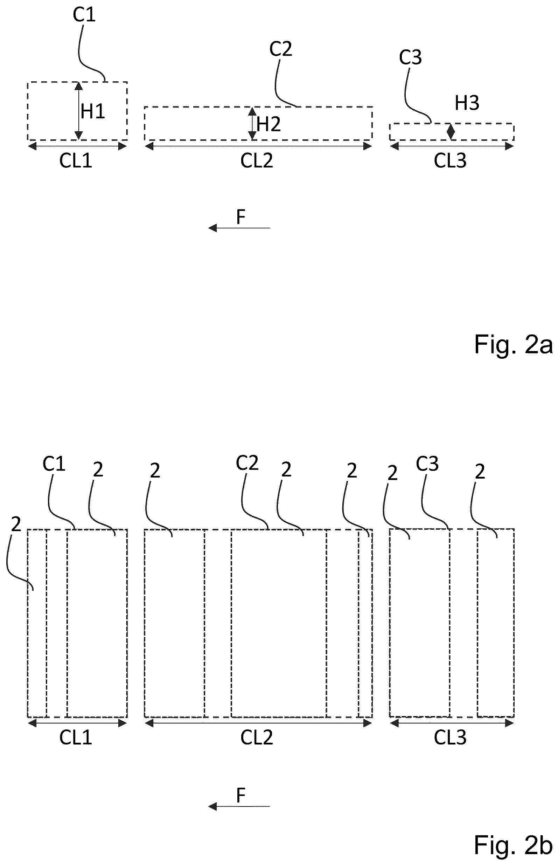

Figur 1 zeigt schematisch ein Bearbeitungszentrum 1 gemäß einer bevorzugten Ausführungsform. Das Bearbeitungszentrum 1 dient der Bearbeitung von Werkstücken 2 von verschiedenen Werkstückchargen C1, C2, C3, wobei die jeweilige Werkstückcharge C1, C2, C3 ein Werkstück 2 oder eine Gruppe von Werkstücken 2 mit derselben Werkstückhöhe H1, H2, H3 umfasst. Drei Werkstückchargen C1, C2, C3, die jeweils eine Gruppe von Werkstücken mit derselben Werkstückhöhe H1, H2, H3 umfassen, zeigen die Figur 2a in einer Seitenansicht ohne Abbildung der Werkstücke 2, und Figur 2b in der Draufsicht mit Darstellung der Werkstücke 2. Üblicherweise liegt die Werkstückhöhe der zu bearbeitenden Werkstücke 2 in einem Bereich von mindestens 0,5 mm und maximal 300 mm.

Die Werkstückchargen erstrecken sich jeweils über eine Werkstückchargenlänge CL1, CL2, CL3. Die Werkstückchargenlänge CL1, CL2, CL3 der jeweiligen Werkstückcharge C1, C2, C3 ist hierbei der Abstand einer in Förderrichtung F vorderen Kante eines in Förderrichtung F ersten Werkstücks einer Werkstückcharge C1, C2, C3 und der in Förderrichtung F hinteren Kante eines in Förderrichtung F letzten Werkstücks der jeweiligen Werkstückcharge C1, C2, C3. Entsprechend weisen in den Figuren 2a, 2b die Werkstücke 2 der ersten Werkstückcharge C1 eine erste Werkstückhöhe H1, die Werkstücke 2 der zweiten Werkstückcharge C2 eine zweite Werkstückhöhe H2, und die Werkstücke 2 der dritten Werkstückcharge C3 eine dritte Werkstückhöhe H3 auf. Bei der Bearbeitung von Werkstücken verschiedener Werkstückchargen ist darauf zu achten, dass eine Höhendifferenz zwischen aufeinander folgenden zu bearbeitenden Werkstückchargen nicht überschritten wird, so dass eine unterbrechungsfreie Bearbeitung der Werkstücke durch das erfindungsgemäße Bearbeitungszentrum möglich ist.

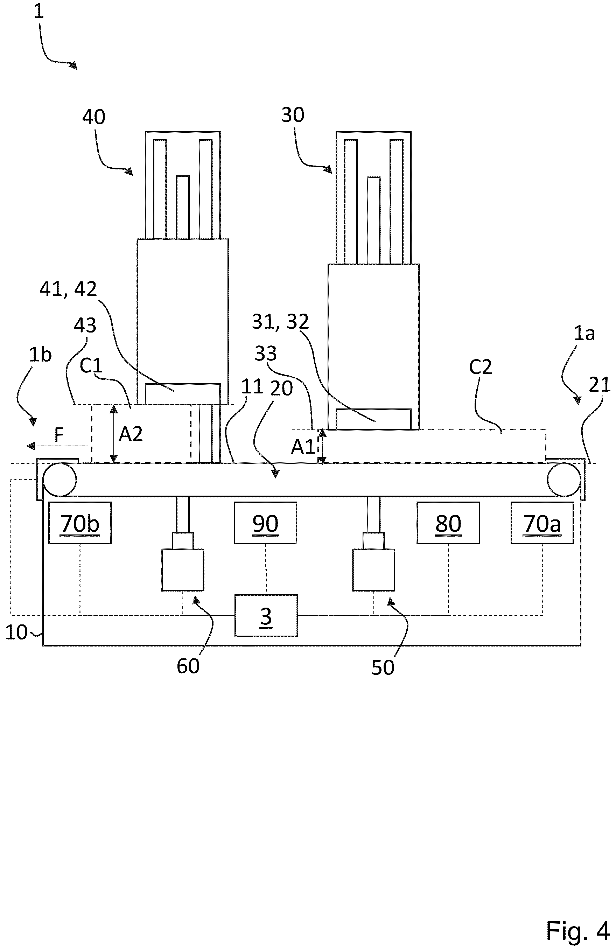

Das in der Figur 1 schematisch dargestellte Bearbeitungszentrum 1 umfasst einen Arbeitstisch 10 mit einer Auflagefläche 11, auf der die Werkstücke 2 der jeweiligen Werkstückchargen C1, C2, C3 zur Bearbeitung aufliegen. Aus Gründen der Übersicht sind in Figur 1 zur Veranschaulichung des Aufbaus des Bearbeitungszentrums 1 keine Werkstücke 2 bzw. Werkstückchargen abgebildet. Werkstücke 2 mit verschiedenen Werkstückhöhen H1, H2, H3 sind in Bezug auf das Bearbeitungszentrum in den Figuren 4 bis 7 dargestellt, welche exemplarisch die Bearbeitung von Werkstücken 2 von verschiedenen Werkstückchargen C1, C2, C3 zeigen.

Ferner umfasst das in der Figur 1 schematisch dargestellte Bearbeitungszentrum 1 eine Fördereinheit 20. Die Fördereinheit 20 bildet hierbei die Auflagefläche 11 mit einer Förderebene 21 aus. Es ist vorgesehen, dass die Fördereinheit 20 zur Bearbeitung der Werkstücke 2 diese in der Förderrichtung F des Bearbeitungszentrums 1 von einem Maschineneinlauf 1a zu einem Maschinenauslauf 1b des Bearbeitungszentrums 1 transportiert. Hierzu weist die Fördereinheit 20 in dem vorliegenden Ausführungsbeispiel ein Förderband 22 auf, welches am Maschineneinlauf 1a von einer ersten angetriebenen Stützwalze 23 und am Maschinenauslauf 1b von einer zweiten angetriebenen Stützwalze 24 angetrieben wird. Die erste und zweite angetriebene Stützwalze 23, 24 können durch einen Elektromotor und entsprechende Antriebsriemen oder dergleichen oder jeweils von einem Elektromotor angetrieben werden. Das Förderband umläuft die erste und zweite angetriebene Stützwalze 23, 24 als Endlosband, wobei sich das Förderband 22 in der Förderrichtung F in der Förderebene 21 erstreckt bzw. die Auflagefläche 11 ausbildet. Die Geschwindigkeit mit der die Fördereinheit 10 die Werkstücke zur Bearbeitung vom Maschineneinlauf 1a zum Maschinenauslauf 1b transportiert, d. h. der Vorschub des Bearbeitungszentrums 1, kann variieren. Vorzugsweise liegt der Vorschub in einem Bereich von mindestens 0,5 m/min und maximal von 20 m/min.

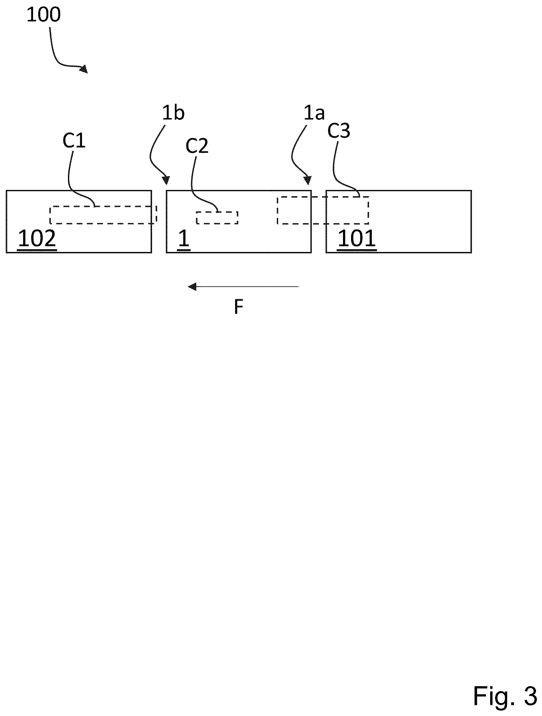

Vorzugsweise wird der Vorschub des Bearbeitungszentrums 1 entsprechend einem Linientakt einer Fertigungslinie 100 gewählt. Dies ermöglicht eine effiziente Bearbeitung von Werkstücken 2 in der Fertigungslinie 100. Figur 3 zeigt schematisch eine Fertigungslinie 100 mit einem Bearbeitungszentrum 1 wie dies in Figur 1 dargestellt ist. In dieser Darstellung ist das Bearbeitungszentrum 1 Teil einer Fertigungslinie 100, wobei dem Bearbeitungszentrum 1 in der Förderrichtung F eine Bearbeitungsstation 101 vorgelagert und in Förderrichtung F eine Bearbeitungsstation 102 nachgelagert angeordnet ist. Als Teil der Fertigungslinie 100 erhält das Bearbeitungszentrum 1 von der in Förderrichtung F vorgelagert angeordneten Bearbeitungsstation 101 die zu bearbeitenden Werkstücke 2 der Werkstückchargen C1, C2, C3 über den Maschineneinlauf 1a und stellt die bearbeiteten Werkstücke 2 der Werkstückchargen C1, C2, C3 der in Förderrichtung F nachgelagert angeordneten Bearbeitungsstation 102 über den Maschinenauslauf 1b bereit. Entsprechend ist in der in Figur 1 dargestellten Ausführungsform des Bearbeitungszentrums 1 vorgesehen, dass die Höhe der Auflagefläche, d. h. der Abstand der Auflagefläche zum Boden, auf dem das Bearbeitungszentrum 1 zur Bearbeitung von Werkstücken steht, während der Bearbeitung der Werkstücke 2 nicht verändert wird. Dies bedeutet, dass die Auflagefläche 11 während der Bearbeitung der Werkstücke 2 nicht orthogonal zur Förderebene 21 verändert wird.

Vielmehr wird die Bearbeitung von Werkstücken 2 von verschiedenen Werkstückchargen C1, C2, C3 mit unterschiedlichen Werkstückhöhen H1, H2, H3 erreicht, indem eine erste Bearbeitungseinheit 30 und eine in der Förderrichtung F hinter der ersten Bearbeitungseinheit 30 mit einem Bearbeitungseinheitenabstand BA angeordnete zweite Bearbeitungseinheit 40 des Bearbeitungszentrums orthogonal zur Förderebene 21 gegenüber der Auflagefläche 11 verschoben werden. Hierbei ist es vorgesehen, dass die erste Bearbeitungseinheit 30 und die zweite Bearbeitungseinheit 40 unabhängig voneinander, aber in Abhängigkeit der zu bearbeitenden Werkstücke 2 der jeweiligen Werkstückchargen C1, C2, C3 orthogonal zur Förderebene 21 gegenüber der Auflagefläche 11 verschoben werden können.

Zur Bearbeitung der Werkstücke 2 umfasst die erste Bearbeitungseinheit 30 einen ersten Werkzeugsatz 32. Hierbei bildet die erste Bearbeitungseinheit 30 einen ersten Bearbeitungsabschnitt 31 aus, an dem der erste Werkzeugsatz 32 zur Bearbeitung der Werkstücke 2 derart angeordnet ist, dass der erste Werkzeugsatz 32 eine erste Bearbeitungsebene 33 definiert, welche sich parallel zu der Förderebene 21 erstreckt. Die erste Bearbeitungsebene 33 und die Förderebene 21 sind dabei mit einem ersten Abstand A1 zueinander beabstandet angeordnet, wobei die erste Bearbeitungseinheit 30 gegenüber der Auflagefläche 11 in einer solchen Weise verstellbar ist, dass der erste Abstand A1 zwischen einem ersten Minimalabstand und einem von dem ersten Minimalabstand verschiedenen ersten Maximalabstand einstellbar ist.

Entsprechend umfasst die zweite Bearbeitungseinheit 40 zur Bearbeitung der Werkstücke 2 einen zweiten Werkzeugsatz 32. In diesem Fall bildet die zweite Bearbeitungseinheit 40 einen zweiten Bearbeitungsabschnitt 41 aus, an dem der zweite Werkzeugsatz 42 zur Bearbeitung der Werkstücke 2 derart angeordnet ist, dass der zweite Werkzeugsatz 42 eine zweite Bearbeitungsebene 43 definiert, welche sich parallel zu der Förderebene 21 erstreckt. Die zweite Bearbeitungsebene 43 und die Förderebene 21 sind dabei mit einem zweiten Abstand A2 zueinander beabstandet angeordnet, wobei die zweiten Bearbeitungseinheit 40 gegenüber der Auflagefläche 11 in einer solchen Weise verstellbar ist, dass der zweite Abstand A2 zwischen einem zweiten Minimalabstand und einem von dem zweiten Minimalabstand verschiedenen zweiten Maximalabstand einstellbar ist.

Es ist im vorliegenden Ausführungsbeispiel des Bearbeitungszentrums 1 vorgesehen, dass der erste Minimalabstand dem zweiten Minimalabstand entspricht und der erste Maximalabstand dem zweiten Maximalabstand entspricht. Vorzugsweise betragen der erste und der zweite Minimalabstand 0,5 mm und der erste und der zweite Maximalabstand 300 mm.

Die Einstellung des ersten Abstands A1 und des zweiten Abstands A2 wird durch eine erste Höhenverstellantriebseinheit 50 und eine zweite Höhenverstellantriebseinheit 60 erreicht.

Die erste Höhenverstellantriebseinheit 50 ist dazu ausgebildet, die erste Bearbeitungseinheit 30 gegenüber der Auflagefläche 11 in einer solchen Weise zu verstellen, dass der erste Abstand A1 zwischen dem ersten Minimalabstand und dem ersten Maximalabstand einstellbar ist. Hierzu weist die erste Höhenverstellantriebseinheit 50 einen ersten Hochgeschwindigkeits-Servoantrieb 51 auf, der mit einer ersten Kugelumlaufspindel 52 gekoppelt ist. Die erste Bearbeitungseinheit 30 ist mit der ersten Kugelumlaufspindel 52 gekoppelt und wird translatorisch geführt, so dass eine Drehung des ersten Hochgeschwindigkeits-Servoantriebs 51 eine Drehung der ersten Kugelumlaufspindel 52 bedingt, was zu einer translatorischen Verschiebung der ersten Bearbeitungseinheit entlang einer translatorischen Führung und somit zur Einstellung des ersten Abstands A1 führt.

Entsprechend ist die zweite Bearbeitungseinheit 40 gegenüber der Auflagefläche 11 in einer solchen Weise zu verstellen, dass der zweite Abstand A2 zwischen dem zweiten Minimalabstand und dem zweiten Maximalabstand einstellbar ist. Hierzu weist die zweite Höhenverstellantriebseinheit 60 einen zweiten Hochgeschwindigkeits-Servoantrieb 61 auf, der mit einer zweiten Kugelumlaufspindel 62 gekoppelt ist. Die zweite Bearbeitungseinheit 40 ist mit der zweiten Kugelumlaufspindel 62 gekoppelt und wird translatorisch geführt, so dass eine Drehung des zweiten Hochgeschwindigkeits-Servoantriebs 61 eine Drehung der zweiten Kugelumlaufspindel 62 bedingt, was zu einer translatorischen Verschiebung der zweiten Bearbeitungseinheit entlang einer translatorischen Führung und somit zur Einstellung des zweiten Abstands A2 führt.

Wie gesagt erfolgt die Einstellung des ersten und zweiten Abstands A1, A2 unabhängig voneinander, aber in Abhängigkeit der zu bearbeitenden Werkstücke der jeweiligen Werkstückcharge. Zur Bearbeitung von Werkstücken 2 von verschiedenen Werkstückchargen C1, C2, C3 können der erste Abstand A1 und der zweite Abstand A2 daher derart einstellbar sein, dass zur zeitgleichen Bearbeitung von mehreren Werkstückchargen C1, C2, C3 mit unterschiedlichen Werkstückhöhen H1, H2, H3 der erste Abstand A1 von dem zweiten Abstand A2 verschieden einstellbar ist.

Die Figuren 4 bis 7 zeigen schematisch ein Bearbeitungszentrum 1 gemäß einer bevorzugten Ausführungsform, welches exemplarisch die Bearbeitung von Werkstücken 2 von verschiedenen Werkstückchargen C1, C2, C3 mit unterschiedlichen Werkstückhöhen H1, H2, H3 in unterschiedlichen Förderpositionen bzw. Bearbeitungszeitpunkten darstellt.

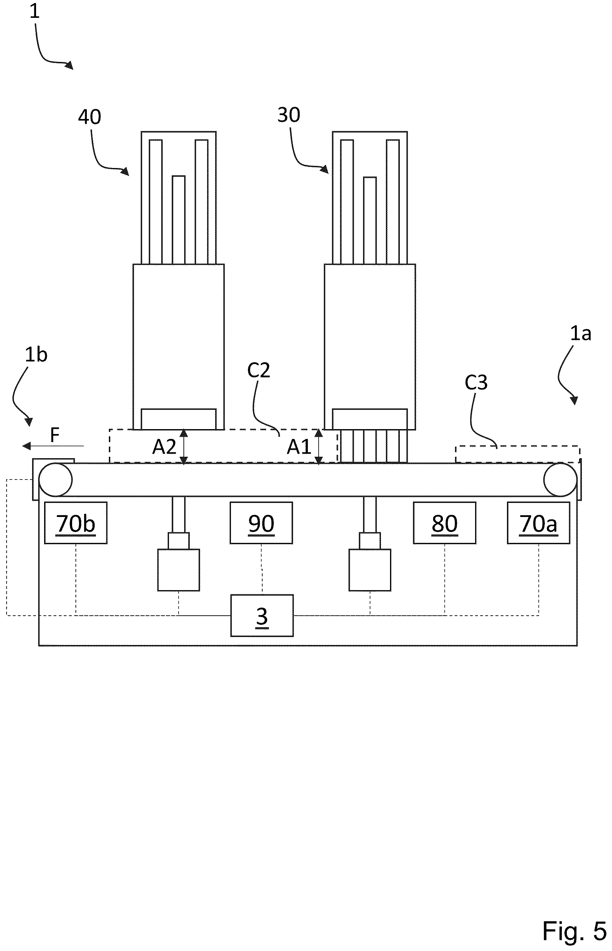

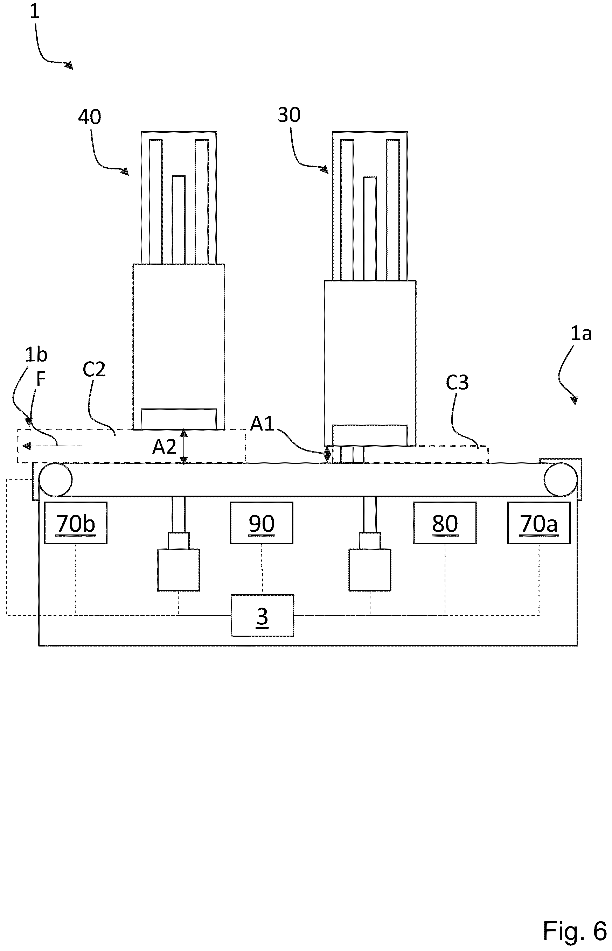

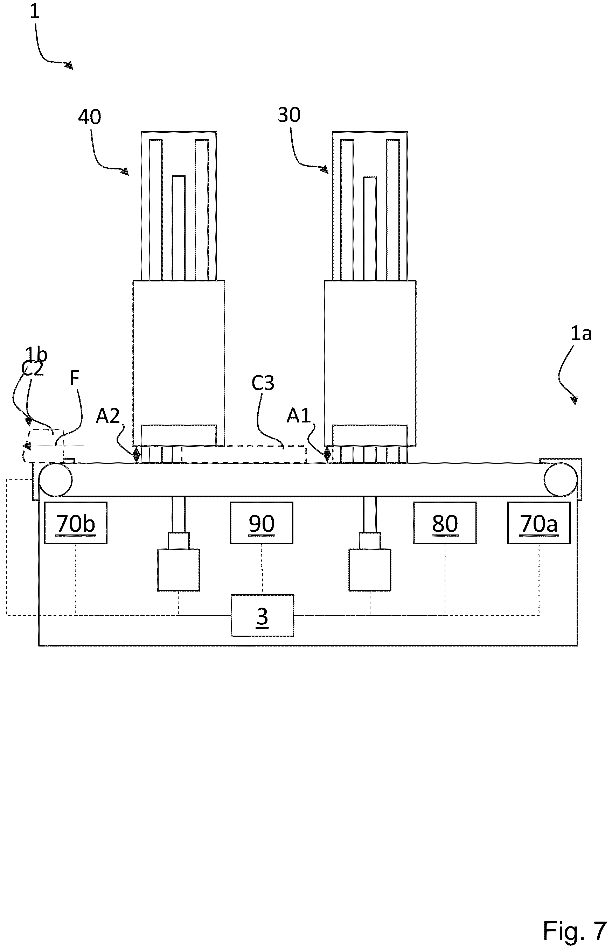

In Figur 4 erstreckt sich eine erste Werkstückcharge C1 mit einer ersten Werkstückhöhe H1 in einen zweiten Arbeitsraum R2 der zweiten Bearbeitungseinheit 40 und eine zweite Werkstückcharge C2 mit einer zweiten Werkstückhöhe H2 in einen ersten Arbeitsraum R1 der ersten Bearbeitungseinheit 30. Entsprechend erfolgt in Figur 4 die Bearbeitung der ersten Werkstückcharge C1 mit einer ersten Werkstückhöhe H1 an der zweiten Bearbeitungseinheit 40 mit einem zweiten Abstand A2, der sich an der ersten Werkstückhöhe H1 orientiert, und die Bearbeitung der zweiten Werkstückcharge C2 mit einer zweiten Werkstückhöhe H2 an der ersten Bearbeitungseinheit 30 mit einem ersten Abstand A1, der sich an der zweiten Werkstückhöhe H2 orientiert. In Figur 5 wurde die erste Werkstückcharge C1 bereits am Maschinenauslauf 1b ausgeführt, in dem dort gezeigten Zustand erstreckt sich die zweite Werkstückcharge C2 über eine zweite Werkstückchargenlänge CL2, die größer ist als eine zweite Arbeitsraumlänge und ein Bearbeitungseinheitenabstand, so dass die Werkstücke 2 der Werkstückcharge C2 sowohl von der ersten als auch der zweiten Bearbeitungseinheit 30, 40 bearbeitet werden. Entsprechend orientieren sich der erste und zweite Abstand A1, A2 an der zweiten Werkstückhöhe H2. In der in Figur 5 gezeigten Förderposition kann daher der erste Abstand A1 der ersten Bearbeitungseinheit 30 noch nicht an die dritte Werkstückhöhe H3 der dritten Werkstückcharge C3 angepasst werden. In Figur 6 verlässt die zweite Werkstückcharge C2 das Bearbeitungszentrum 1 bereits teilweise am Maschinenauslauf 1b, befindet sich allerdings noch im zweiten Arbeitsraum R2 der zweiten Bearbeitungseinheit 40. Entsprechend orientiert sich der zweite Abstand A2 an der zweiten Werkstückhöhe H2. Allerdings steht in der in Figur 6 gezeigten Förderposition, die zweite Werkstückhöhe H2 nicht mehr im Eingriff mit der ersten Bearbeitungseinheit 30 bzw. hat den ersten Arbeitsraum R1 der ersten Bearbeitungseinheit verlassen. In dieser Förderposition wurde vielmehr die dritte Werkstückcharge C3 dem ersten Arbeitsraum R1 der ersten Bearbeitungseinheit 30 bereits zur Bearbeitung der Werkstücke 2 zugeführt. Entsprechend orientiert sich der erste Abstand A1 an der dritten Werkstückhöhe H3. Figur 7 zeigt nun eine Förderposition, in dem die zweite Werkstückcharge C2 das Bearbeitungszentrum 1 am Maschinenauslauf 1b im Wesentlichen verlassen hat. Es erstreckt sich nun die dritte Werkstückcharge C3 in den zweiten Arbeitsraum R2 der zweiten Bearbeitungseinheit 40. Entsprechend orientiert sich der zweite Abstand A2 an der dritten Werkstückhöhe H3.

Aus den Figuren 4 bis 7 wird ersichtlich, dass je nach Werkstückchargenlänge CL1, CL2 und CL3 einerseits und der ersten und zweiten Arbeitsraumlänge RL1, RL2 sowie dem Bearbeitungseinheitenabstand BA andererseits, die erste und zweite Bearbeitungseinheit 30, 40 gleichzeitig Werkstücke 2 von verschiedenen Werkstückchargen C1, C2, C3 mit verschiedenen Werkstückhöhen H1, H2, H3 bearbeitet. Aus den Figuren 4 bis 7 wird ebenso ersichtlich, dass je nach Werkstückchargenlänge CL1, CL2 und CL3 einerseits und der ersten und zweiten Arbeitsraumlänge RL1, RL2 sowie dem Bearbeitungseinheitenabstand BA andererseits, Werkstücke 2 derselben Werkstückcharge C1, C2, C3 von mehreren Bearbeitungseinheiten gleichzeitig bearbeitet werden können.

Für die automatisierte Bearbeitung von Werkstücken von verschiedenen Werkstückchargen C1, C2, C3 kann das Bearbeitungszentrum Sensoren umfassen, welche ermöglichen, die Werkstückhöhe H1, H2, H3 und die Werkstückchargenlänge CL1, CL2, CL3 zu bestimmen. In dem in den Figuren 1 und 4 bis 7 gezeigten Ausführungsbeispiel des Bearbeitungszentrums sind hierzu eine Einlauf-Chargendetektionsvorrichtung 70a zur Höhenmessung der am Maschineneinlauf 1a zur Bearbeitung zugeführten Werkstücke 2 einer Werkstückcharge C1, C2, C3, eine Auslauf-Chargendetektionsvorrichtung 70b zur Höhenmessung der am Maschinenauslauf 1b ausgeführten Werkstücke 2 einer Werkstückcharge C1, C2, C3, ein erste Übermaßschutzvorrichtung 80, die eine erste Chargendetektionsvorrichtung umfasst, und eine zweite Übermaßschutzvorrichtung 90, die eine zweite Chargendetektionsvorrichtung umfasst, vorgesehen. Es ist vorgesehen, dass die erste Übermaßschutzvorrichtung 80 in der Förderrichtung F vor der ersten Bearbeitungseinheit 30 und hinter der Einlauf-Chargendetektionsvorrichtung 70a angeordnet ist und die zweite Übermaßschutzvorrichtung 90 hinter der ersten Bearbeitungseinheit 30 und vor der zweiten Bearbeitungseinheit 40 angeordnet ist.

Die erste und zweite Bearbeitungseinheit 30, 40, die Antriebe der ersten und zweiten angetriebenen Stützwalzen 23, 24, die erste und zweite Höhenverstellantriebseinheit 50, 60, die Einlauf-Chargendetektionsvorrichtung, die Auslauf-Chargendetektionsvorrichtung sowie die erste und zweite Übermaßschutzvorrichtung 80, 90 sind mit einer Steuerungseinheit 3 signaltechnisch gekoppelt. Entsprechend kann der erste Abstand A1 beispielsweise in Abhängigkeit der durch die Einlauf-Chargendetektionsvorrichtung 70a erfassten Werkstückcharge, und/oder in Abhängigkeit der durch die erste Chargendetektionsvorrichtung erfassten Werkstückhöhe H1, H2, H3, und in Abhängigkeit des Vorschubs eingestellt werden. Der zweite Abstand kann beispielsweise in Abhängigkeit der durch die Einlauf-Chargendetektionsvorrichtung 70a erfassten Werkstückcharge, in Abhängigkeit der durch die zweite Chargendetektionsvorrichtung erfassten Werkstückhöhe H1, H2, H3, und in Abhängigkeit des Vorschubs V eingestellt werden. Selbstverständlich ist ein automatisiertes Einstellen des ersten und zweiten Abstands A1 und A2 beispielsweise auch möglich, wenn die jeweilige Chargenlänge, die jeweilige Arbeitsraumlänge, der Bearbeitungseinheitenabstand BA, der Vorschub und der Drehwinkel der ersten und/oder zweiten angetriebenen Stützwalze bekannt sind.

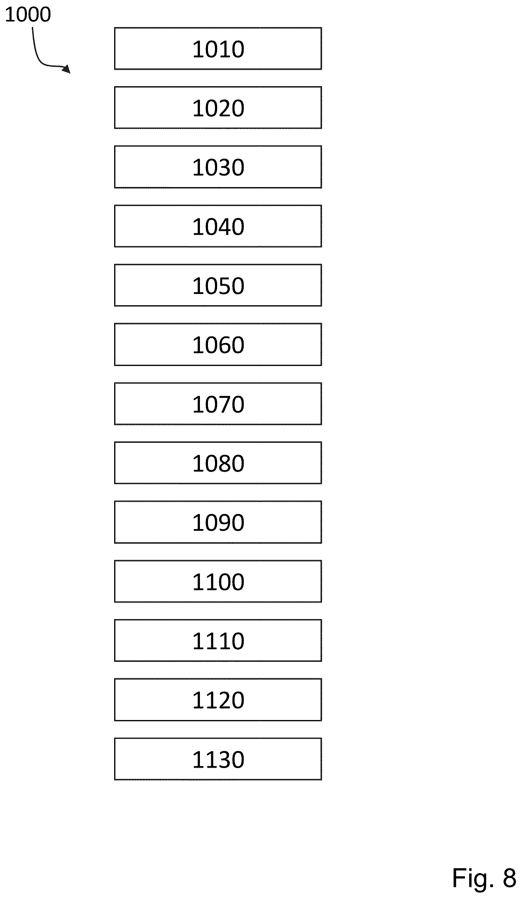

Figur 8 zeigt ein schematisches Blockdiagramm einer bevorzugten Ausführungsform eines Verfahrens 1000 zur Bearbeitung von Werkstücken 2 von verschiedenen Chargen C1, C2, C3. Das Verfahren 1000 umfasst hierbei folgende Schritte:
Bestimmen 1010 eines ersten Einlauf-Signals, welches einer mit einer Einlauf-Chargendetektionsvorrichtung 70a erfassten ersten Werkstückhöhe H1, H2, H3 einer am Maschineneinlauf 1a zugeführten ersten Werkstückcharge C1 und ersten Chargenlänge CL1 der zugeführten ersten Werkstückcharge C1 entspricht. Ferner umfasst das Verfahren den Schritt des Bestimmens 1020 eines zweiten Einlauf-Signals, welches einer mit der Einlauf-Chargendetektionsvorrichtung 70a erfassten zweiten Werkstückhöhe H1, H2, H3 einer am Maschineneinlauf 1a zugeführten zweiten Werkstückcharge C2 und einer zweiten Chargenlänge CL2 der zugeführten zweiten Werkstückcharge C2 entspricht, wobei die zweite Werkstückcharge C2 in einer Förderrichtung F der Bearbeitungszentrum 1 hinter der ersten Werkstückcharge C1 angeordnet ist. Ferner umfasst das Verfahren 1000 ein Bestimmen 1030 eines Vorschubs einer Fördereinheit 20, mit dem die Werkstückchargen C1, C2 zur Bearbeitung mit dem Bearbeitungszentrum 1 in einer Förderebene 21 von einem Maschineneinlauf 1a zu einem Maschinenauslauf 1b transportiert werden. Es folgen ein Einstellen 1040 eines ersten Abstands A1 einer ersten Bearbeitungseinheit 30, wobei die erste Bearbeitungsebene 33 und die Förderebene 21 mit einem ersten Abstand A1 zueinander beabstandet einstellbar angeordnet sind in Abhängigkeit des bestimmten Vorschubs und der bestimmten ersten Chargenlänge CL1 und/oder der bestimmten zweiten Chargenlänge CL2, sowie ein Einstellen 1050 eines zweiten Abstands A2 einer zweiten Bearbeitungseinheit 40, wobei die zweite Bearbeitungsebene 43 und die Förderebene 21 mit einem zweiten Abstand A2 zueinander beabstandet angeordnet sind in Abhängigkeit des bestimmten Vorschubs und der bestimmten ersten Chargenlänge CL1 und/oder der bestimmten zweiten Chargenlänge CL2.

Ferner ist es vorliegend bevorzugt, den Vorschub in Abhängigkeit von einer bestimmten Höhendifferenz, und/oder einem bestimmten Chargenabstand, und/oder einer ersten Einstellgeschwindigkeit, und/oder einer zweiten Einstellgeschwindigkeit zu bestimmen 1030. Entsprechend weist das Verfahren 1000 folgende Schritte auf: Bestimmen 1060 einer Höhendifferenz zwischen der aufeinander folgenden ersten und zweiten Charge C1, C2 basierend auf dem bestimmten ersten Einlauf-Signal und bestimmten zweiten Einlauf-Signal, Bestimmen 1070 eines Chargenabstands zwischen der aufeinander folgenden ersten und zweiten Charge C1, C2 basierend auf dem bestimmten ersten und zweiten Einlauf-Signal, Bestimmen 1080 einer ersten Einstellgeschwindigkeit einer ersten Höhenverstellantriebseinheit 50, und/oder Bestimmen 1090 einer zweiten Einstellgeschwindigkeit einer zweiten Höhenverstellantriebseinheit 60.

Schließlich ist vorliegend ein (Not-)Stoppen des Bearbeitungszentrums 1 vorgesehen. Das Verfahren 1000 umfasst daher auch folgende Schritte: Bestimmen 1100 einer größten Arbeitsraumlänge aus einer ersten Arbeitsraumlänge einer ersten Bearbeitungseinheit und einer zweiten Arbeitsraumlänge einer zweiten Bearbeitungseinheit, Bestimmen 1110 einer Höhendifferenz zwischen der aufeinander folgenden ersten und zweiten Charge C1, C2 basierend auf dem bestimmten ersten Einlauf-Signal und bestimmten zweiten Einlauf-Signal, Bestimmen 1120 eines Chargenabstands zwischen der aufeinander folgenden ersten und zweiten Charge C1, C2 basierend auf dem bestimmten ersten und zweiten Einlauf-Signal, Bestimmen 1130 eines Mindestchargenabstands zwischen der aufeinander folgenden ersten und zweiten Charge C1, C2, wobei der Mindestchargenabstand einer Summe aus der bestimmten größten Arbeitsraumlänge und dem Produkt aus dem bestimmten Vorschub der bestimmten Höhendifferenz geteilt durch einer Verstellgeschwindigkeit einer ersten Höhenverstellantriebseinheit 50 und/oder einer zweiten Höhenverstellantriebseinheit 60, Vergleichen des bestimmten Mindestchargenabstands mit dem bestimmten Chargenabstand, Stoppen der Bearbeitung durch das Bearbeitungszentrum, wenn der bestimmte Chargenabstand kleiner ist als der bestimmte Mindestchargenabstand.

### BEZUGSZEICHENLISTE

- 1: Bearbeitungszentrum
- 1a: Maschineneinlauf
- 1b: Maschinenauslauf
- 2: Werkstück
- 10: Arbeitstisch
- 11: Auflagefläche
- 20: Fördereinheit
- 21: Förderebene
- 30: erste Bearbeitungseinheit
- 31: erster Bearbeitungsabschnitt
- 32: ersten Werkzeugsatz
- 33: erste Bearbeitungsebene
- 40: zweite Bearbeitungseinheit
- 41: zweiter Bearbeitungsabschnitt
- 42: zweiter Werkzeugsatz
- 43: zweite Bearbeitungsebene
- 50: erste Höhenverstellantriebseinheit
- 60: zweite Höhenverstellantriebseinheit
- 70a: Einlauf-Chargendetektionsvorrichtung
- 70b: Auslauf-Chargendetektionsvorrichtung
- 80: erste Chargendetektionsvorrichtung
- 90: zweite Chargendetektionsvorrichtung
- A1: erster Abstand
- A2: zweiter Abstand
- BA: Bearbeitungseinheitenabstand
- C1, C2, C3: Werkstückchargen
- CL1, CL2, CL3: Werkstückchargenlänge
- F: Förderrichtung
- H1, H2, H3: Werkstückhöhe
- R1: erster Arbeitsraum
- R2: zweiter Arbeitsraum
- RL1: ersten Raumlänge
- RL2: zweite Raumlänge

## Patentansprüche

1. Bearbeitungszentrum (1) zur Bearbeitung von Werkstücken (2) von verschiedenen Werkstückchargen (C1, C2, C3), wobei die jeweilige Werkstückcharge (C1, C2, C3) ein Werkstück (2) oder eine Gruppe von Werkstücken (2) mit derselben Werkstückhöhe (H1, H2, H3) umfasst, wobei das Bearbeitungszentrum insbesondere eine Breitbandschleifmaschine ist, das Bearbeitungszentrum (1) umfassend:
- einen Arbeitstisch (10) mit einer Auflagefläche (11), auf der die Werkstücke (2) der jeweiligen Werkstückchargen (C1, C2, C3) zur Bearbeitung aufliegen,
- eine Fördereinheit (20), welche die Auflagefläche (11) mit einer Förderebene (21) ausbildet,
∘ wobei die Fördereinheit (20) ausgebildet ist, die Werkstücke (2) zur Bearbeitung in einer Förderrichtung (F) von einem Maschineneinlauf (1a) zu einem Maschinenauslauf (1b) des Bearbeitungszentrums (1) mit einem Vorschub zu transportieren,
∘ wobei dem Bearbeitungszentrum (1) über den Maschineneinlauf (1a) Werkstücke (2) zur Bearbeitung zugeführt werden und über den Maschinenauslauf (1b) die bearbeiteten Werkstücke (2) aus dem Bearbeitungszentrum (1) ausgeführt werden,
- eine gegenüber der Auflagefläche (11) verstellbar angeordnete erste Bearbeitungseinheit (30) zur Bearbeitung der auf der Auflagefläche (11) angeordneten Werkstücke (2) mit einem ersten Werkzeugsatz (32),
∘ wobei die erste Bearbeitungseinheit (30) einen ersten Bearbeitungsabschnitt (31) ausbildet, an dem der erste Werkzeugsatz (32) zur Bearbeitung der Werkstücke (2) derart angeordnet ist, dass der erste Werkzeugsatz (32) eine erste Bearbeitungsebene (33) definiert, welche sich parallel zu der Förderebene (21) erstreckt,
∘ wobei die erste Bearbeitungsebene (33) und die Förderebene (21) mit einem ersten Abstand (A1) zueinander beabstandet angeordnet sind,
∘ wobei die erste Bearbeitungseinheit (30) gegenüber der Auflagefläche (11) in einer solchen Weise verstellbar ist, dass der erste Abstand (A1) zwischen einem ersten Minimalabstand und einem von dem ersten Minimalabstand verschiedenen ersten Maximalabstand einstellbar ist, und
- eine gegenüber der Auflagefläche (11) verstellbar angeordnete zweite Bearbeitungseinheit (40) zur Bearbeitung der auf der Auflagefläche (11) angeordneten Werkstücke (2) mit einem zweiten Werkzeugsatz,
∘ wobei die zweite Bearbeitungseinheit (40) einen zweiten Bearbeitungsabschnitt (41) ausbildet, an dem der zweite Werkzeugsatz (42) zur Bearbeitung der Werkstücke (2) derart angeordnet ist, dass der zweite Werkzeugsatz (42) eine zweite Bearbeitungsebene (43) definiert, welche sich parallel zu der Förderebene (21) erstreckt,
∘ wobei die zweite Bearbeitungsebene (43) und die Förderebene (21) mit einem zweiten Abstand (A2) zueinander beabstandet angeordnet sind,
∘ wobei die zweite Bearbeitungseinheit (40) gegenüber der Auflagefläche (11) in einer solchen Weise verstellbar ist, dass der zweite Abstand (A2) zwischen einem zweiten Minimalabstand und einem von dem zweiten Minimalabstand verschiedenen zweiten Maximalabstand einstellbar ist, und
- die zweite Bearbeitungseinheit (40) in der Förderrichtung (F) mit einem Bearbeitungseinheitenabstand (BA) hinter der ersten Bearbeitungseinheit (30) angeordnet ist,
**dadurch gekennzeichnet, dass**
- eine erste Höhenverstellantriebseinheit (50) angeordnet ist, die dazu ausgebildet ist, die erste Bearbeitungseinheit (30) gegenüber der Auflagefläche (11) in einer solchen Weise zu verstellen, dass der erste Abstand (A1) zwischen dem ersten Minimalabstand und dem ersten Maximalabstand einstellbar ist, und
- eine zweite Höhenverstellantriebseinheit (60) angeordnet ist, die dazu ausgebildet ist, die zweite Bearbeitungseinheit (40) gegenüber der Auflagefläche (11) in einer solchen Weise zu verstellen, dass der zweite Abstand (A2) zwischen dem zweiten Minimalabstand und dem zweiten Maximalabstand einstellbar ist,
- wobei zur Bearbeitung von Werkstücken (2) von verschiedenen Werkstückchargen (C1, C2, C3) der erste Abstand (A1) und der zweite Abstand (A2) derart einstellbar sind, dass zur zeitgleichen Bearbeitung von mehreren Chargen (C1, C2, C3) mit unterschiedlichen Werkstückhöhen (H1, H2, H3) der erste Abstand (A1) von dem zweiten Abstand (A2) verschieden einstellbar ist.

2. Bearbeitungszentrum (1) nach dem vorhergehenden Anspruch 1, wobei
- die erste Bearbeitungseinheit (30) zwischen der ersten Bearbeitungsebene (33) und der Förderebene (21) einen ersten Arbeitsraum (R1) ausbildet, der sich in der Förderrichtung (F) mit einer ersten Raumlänge (RL1) erstreckt, und/oder
- die zweite Bearbeitungseinheit (40) zwischen der zweiten Bearbeitungsebene (43) und der Förderebene (21) einen zweiten Arbeitsraum (R2) ausbildet, der sich in der Förderrichtung (F) mit einer zweiten Raumlänge (RL2) erstreckt, und/oder
- die jeweiligen Werkstückchargen (C1, C2, C3) sich in der Förderrichtung (F) mit einer Chargenlänge (CL1, CL2, CL3) erstrecken.

3. Bearbeitungszentrum (1) nach einem der vorhergehenden Ansprüche 1 oder 2, umfassend
- eine Einlauf-Chargendetektionsvorrichtung (70a) zur Höhenmessung der am Maschineneinlauf (1a) zur Bearbeitung zugeführten Werkstücke (2) einer Werkstückcharge (C1, C2, C3), und/oder
- eine Auslauf-Chargendetektionsvorrichtung (70b) zur Höhenmessung der am Maschinenauslauf (1b) ausgeführten Werkstücke (2) einer Werkstückcharge (C1, C2, C3), und/oder
- eine in der Förderrichtung (F) vor der ersten Bearbeitungseinheit (30) angeordnete erste Chargendetektionsvorrichtung zur Höhenmessung der der ersten Bearbeitungseinheit (30) zur Bearbeitung zuzuführenden Werkstücke (2) einer Werkstückcharge (C1, C2, C3), und/oder
- eine in der Förderrichtung (F) vor der zweiten Bearbeitungseinheit (40) und/oder nach der ersten Bearbeitungseinheit (30) angeordnete zweite Chargendetektionsvorrichtung zur Höhenmessung der der zweiten Bearbeitungseinheit (40) zur Bearbeitung zuzuführenden Werkstücke (2) einer Werkstückcharge (C1, C2, C3).

4. Bearbeitungszentrum (1) nach dem vorhergehenden Anspruch 3, wobei
- der erste Abstand (A1)
∘ in Abhängigkeit der durch die Einlauf-Chargendetektionsvorrichtung (70a) erfassten Werkstückcharge, und/oder
v in Abhängigkeit der durch die erste Chargendetektionsvorrichtung erfassten Werkstückhöhe (H1, H2, H3) des durch die erste Bearbeitungseinheit (30) zu bearbeitenden Werkstücks (2), und/oder
∘ in Abhängigkeit des Vorschubs (V), und/oder
∘ in Abhängigkeit des Bearbeitungseinheitenabstands (BA), eingestellt wird, wobei der erste Abstand (A1) vorzugsweise der erfassten Werkstückhöhe (H1, H2, H3) abzüglich einer ersten Bearbeitungstiefe entspricht, und/oder
- der zweite Abstand (A2)
∘ in Abhängigkeit der durch die Einlauf-Chargendetektionsvorrichtung (70a) erfassten Werkstückcharge, und/oder
∘ in Abhängigkeit der durch die zweite Chargendetektionsvorrichtung erfassten Werkstückhöhe (H1, H2, H3) des durch die zweite Bearbeitungseinheit (40) zu bearbeitenden Werkstücks (2), und/oder
∘ in Abhängigkeit des Vorschubs (V), und/oder
∘ in Abhängigkeit des Bearbeitungseinheitenabstands (BA),
eingestellt wird, wobei der zweite Abstand (A2) vorzugsweise der erfassten Werkstückhöhe (H1, H2, H3) abzüglich einer zweiten Bearbeitungstiefe entspricht.

5. Bearbeitungszentrum (1) nach einem der vorhergehenden Ansprüche 1-4, die Fördereinheit (20) aufweisend:
- ein Förderband (22) und/oder Förderteppich, und
- eine am Maschineneinlauf (1a) angeordnete erste angetriebene Stützwalze (23) und/oder eine am Maschinenauslauf (1b) angeordnete zweite angetriebene Stützwalze (24),
- wobei die erste und/oder die zweite Stützwalze (23, 24) mit dem Förderband (22) und/oder dem Förderteppich gekoppelt und ausgebildet sind, das Förderband (22) und/oder den Förderteppich zum Transport der Werkstücke (2) anzutreiben.

6. Bearbeitungszentrum (1) nach einem der vorhergehenden Ansprüche 1-5, wobei die Fördereinheit (20) ausgebildet ist, die Werkstücke (2) in Förderrichtung (F)
- mit einem Vorschub von mindestens 0,5 m/min, vorzugsweise von mindestens 1 m/min, und/oder
- mit einem Vorschub von maximal 20 m/min, vorzugsweise von maximal 15 m/min,
zu transportieren.

7. Bearbeitungszentrum (1) nach einem der vorhergehenden Ansprüche 1-6, wobei
- der erste Minimalabstand 0,5 mm, vorzugsweise 1 mm ist, und/oder
- der erste Maximalabstand 200 mm, vorzugsweise 300 mm ist, und/oder
- der zweite Minimalabstand 0,5 mm, vorzugsweise 1 mm ist, und/oder
- der zweite Maximalabstand 200 mm, vorzugsweise 300 mm ist.

8. Bearbeitungszentrum (1) nach einem der vorhergehenden Ansprüche 1-7, wobei
- die erste Höhenverstellantriebseinheit (50) einen ersten Servoantrieb (51), insbesondere einen ersten Hochgeschwindigkeits-Servoantrieb, der mit mindestens einer ersten Kugelumlaufspindel (52) gekoppelt ist, umfasst, und/oder
- die zweite Höhenverstellantriebseinheit (60) einen zweiten Servoantrieb (61), insbesondere einen zweiten Hochgeschwindigkeits-Servoantrieb, der mit mindestens einer zweiten Kugelumlaufspindel (62) gekoppelt ist, umfasst.

9. Bearbeitungszentrum (1) nach einem der vorhergehenden Ansprüche 1-8, wobei ein Absolutwert der Differenz zwischen dem ersten Abstand (A1) und dem zweiten Abstand (A2) größer als eine Differenzuntergrenze ist und/oder kleiner als eine Differenzobergrenze ist, wobei die Differenzobergrenze größer ist als die Differenzuntergrenze.

10. Bearbeitungszentrum (1) nach einem der vorhergehenden Ansprüche 1-9, wobei
- in der Förderrichtung (F) vor der ersten Bearbeitungseinheit (30) eine erste Übermaßschutzvorrichtung (80) angeordnet ist, wobei die erste Übermaßschutzvorrichtung (80) vorzugsweise die erste Chargendetektionsvorrichtung ist oder umfasst, und/oder
- in der Förderrichtung (F) vor der zweiten Bearbeitungseinheit (40) eine zweite Übermaßschutzvorrichtung (90) angeordnet ist, wobei die zweite Übermaßschutzvorrichtung (90) vorzugsweise die zweite Chargendetektionsvorrichtung ist oder umfasst.

11. Bearbeitungszentrum (1) nach einem der vorhergehenden Ansprüche 1-10, umfassend eine Steuerungseinheit (3), insbesondere eine Steuerungseinheit nach Anspruch 16, wobei die Steuerungseinheit (3) signaltechnisch gekoppelt ist, mit
- der ersten Bearbeitungseinheit, und/oder
- der zweiten Bearbeitungseinheit, und/oder
- der Fördervorrichtung, insbesondere der ersten und/oder zweiten angetriebenen Stützwalze, und/oder
- der ersten Höhenverstellantriebseinheit (50), insbesondere dem ersten Servoantrieb (51), und/oder
- der zweiten Höhenverstellantriebseinheit (60), insbesondere dem zweiten Servoantrieb (61), und/oder
- der Einlauf-Chargendetektionsvorrichtung, und/oder
- der Auslauf-Chargendetektionsvorrichtung, und/oder
- der ersten Chargendetektionsvorrichtung, und/oder
- der zweiten Chargendetektionsvorrichtung, und/oder
- der ersten Übermaßschutzvorrichtung (80), und/oder
- der zweiten Übermaßschutzvorrichtung (90).

12. Fertigungslinie (100), umfassend
- ein Bearbeitungszentrum (1) nach einem der vorhergehenden Ansprüche 1-11 zur Bearbeitung von Werkstücken (2) von verschiedenen Chargen (C1, C2, C3), und
- eine dem Bearbeitungszentrum (1) vorgelagert angeordnete Bearbeitungsstation (101), wobei die vorgelagert angeordnete Bearbeitungsstation (101) vorzugsweise eine Lackierstation zum Lackieren der mit dem Bearbeitungszentrum (1) zu bearbeitenden Werkstücke (2) ist, und
- eine dem Bearbeitungszentrum (1) nachgelagert angeordnete Bearbeitungsstation (102), wobei die nachgelagert angeordnete Bearbeitungsstation vorzugsweise eine Lackierstation zum Lackieren der von dem Bearbeitungszentrum bearbeiteten Werkstücke ist,
- wobei vorzugsweise die Auflagefläche der Bearbeitungsmaschine (1) während der Bearbeitung von Werkstücken (2) von verschiedenen Chargen (C1, C2, C3) in einer Ebene liegt, in der
∘ die vorgelagert angeordnete Bearbeitungsstation Werkstücke (2) von verschiedenen Chargen (C1, C2, C3) für die Bearbeitung mit dem Bearbeitungszentrum (1) ausgibt, und/oder
∘ die nachgelagert angeordnete Bearbeitungsstation die von dem Bearbeitungszentrum (1) bearbeiteten Werkstücke (2) von verschiedenen Chargen (C1, C2, C3) aufnimmt.

13. Verfahren (1000) zur Bearbeitung von Werkstücken (2) von verschiedenen Chargen (C1, C2, C3) mit einem Bearbeitungszentrum (1), insbesondere mit einem Bearbeitungszentrum (1) nach einem der vorhergehenden Ansprüche 1-11, umfassend die Schritte:
- Bestimmen (1010) eines ersten Einlauf-Signals, welches einer mit einer Einlauf-Chargendetektionsvorrichtung (70a) erfassten
∘ ersten Werkstückhöhe (H1, H2, H3) einer am Maschineneinlauf (1a) zugeführten ersten Werkstückcharge (C1) entspricht, und/oder
∘einer ersten Chargenlänge (CL1) der zugeführten ersten Werkstückcharge (C1) entspricht,
- Bestimmen (1020) eines zweiten Einlauf-Signals, welches einer mit der Einlauf-Chargendetektionsvorrichtung (70a) erfassten
∘zweiten Werkstückhöhe (H1, H2, H3) einer am Maschineneinlauf (1a) zugeführten zweiten Werkstückcharge (C2) entspricht, und/oder
∘ einer zweiten Chargenlänge (CL2) der zugeführten zweiten Werkstückcharge (C2) entspricht,
∘ wobei die zweite Werkstückcharge (C2) in einer Förderrichtung (F) des Bearbeitungszentrums (1) hinter der ersten Werkstückcharge (C1) angeordnet ist,
- Bestimmen (1030) eines Vorschubs einer Fördereinheit (20), mit dem die Werkstückchargen (C1, C2) zur Bearbeitung mit dem Bearbeitungszentrum (1) in einer Förderebene (21) von einem Maschineneinlauf (1a) zu einem Maschinenauslauf (1b) transportiert werden,
- Einstellen (1040) eines ersten Abstands (A1) einer ersten Bearbeitungseinheit (30), wobei die erste Bearbeitungsebene (33) und die Förderebene (21) mit einem ersten Abstand (A1) zueinander beabstandet einstellbar angeordnet sind in Abhängigkeit des bestimmten Vorschubs und der bestimmten ersten Chargenlänge (CL1) und/oder der bestimmten zweiten Chargenlänge (CL2), und/oder
- Einstellen (1050) eines zweiten Abstands (A2) einer zweiten Bearbeitungseinheit (40), wobei die zweite Bearbeitungsebene (43) und die Förderebene (21) mit einem zweiten Abstand (A2) zueinander beabstandet angeordnet sind in Abhängigkeit des bestimmten Vorschubs und der bestimmten ersten Chargenlänge (CL1) und/oder der bestimmten zweiten Chargenlänge (CL2).

14. Verfahren nach dem vorhergehenden Anspruch 13, umfassend die Schritte:
- Bestimmen (1060) einer Höhendifferenz zwischen der aufeinander folgenden ersten und zweiten Charge (C1, C2) basierend auf dem bestimmten ersten Einlauf-Signal und bestimmten zweiten Einlauf-Signal,
- Bestimmen (1070) eines Chargenabstands zwischen der aufeinander folgenden ersten und zweiten Charge (C1, C2) basierend auf dem bestimmten ersten und zweiten Einlauf-Signal,
- Bestimmen (1080) einer ersten Einstellgeschwindigkeit einer ersten Höhenverstellantriebseinheit (50), und/oder
- Bestimmen (1090) einer zweiten Einstellgeschwindigkeit einer zweiten Höhenverstellantriebseinheit (60), wobei
- der Schritt des Bestimmens (1030) des Vorschubs bestimmt wird in Abhängigkeit von
∘ der bestimmten Höhendifferenz, und/oder
∘ dem bestimmten Chargenabstand, und/oder
∘ der ersten Einstellgeschwindigkeit, und/oder
∘ der zweiten Einstellgeschwindigkeit.

15. Verfahren nach einem der vorhergehenden Ansprüche 13 oder 14, umfassend:
- Bestimmen (1100) einer größten Arbeitsraumlänge aus einer ersten Arbeitsraumlänge einer ersten Bearbeitungseinheit und einer zweiten Arbeitsraumlänge einer zweiten Bearbeitungseinheit,
- Bestimmen (1110) einer Höhendifferenz zwischen der aufeinander folgenden ersten und zweiten Charge (C1, C2) basierend auf dem bestimmten ersten Einlauf-Signal und bestimmten zweiten Einlauf-Signal,
- Bestimmen (1120) eines Chargenabstands zwischen der aufeinander folgenden ersten und zweiten Charge (C1, C2) basierend auf dem bestimmten ersten und zweiten Einlauf-Signal,
- Bestimmen (1130) eines Mindestchargenabstands zwischen der aufeinander folgenden ersten und zweiten Charge (C1, C2), wobei der Mindestchargenabstand einer Summe aus
∘ der bestimmten größten Arbeitsraumlänge und
∘ dem Produkt aus dem bestimmten Vorschub der bestimmten Höhendifferenz geteilt durch eine Verstellgeschwindigkeit einer ersten Höhenverstellantriebseinheit (50) und/oder einer zweiten Höhenverstellantriebseinheit (60) entspricht,
- Vergleichen des bestimmten Mindestchargenabstands mit dem bestimmten Chargenabstand,
- Stoppen der Bearbeitung durch das Bearbeitungszentrum, wenn der bestimmte Chargenabstand kleiner ist als der bestimmte Mindestchargenabstand.

16. Steuerungseinheit (3) zur Steuerung eines Bearbeitungszentrums (1) nach einem der vorhergehenden Ansprüche 1-11, wobei die Steuerungseinheit (3) ausgebildet ist, das Verfahren (1000) nach einem der vorhergehenden Ansprüche 13-15 auszuführen.
